# EUROPÄISCHE PATENTSCHRIFT

(11) **EP 3 372 513 B1**
(45) Veröffentlichungstag und Bekanntmachung des Hinweises auf die Patenterteilung: **18.09.2019**
(21) Anmeldenummer: 18155558.2
(22) Anmeldetag: 07.02.2018
(51) Int. Cl.: B65B 35/44, B65B 35/24, B65B 59/02, B65G 21/12, B65G 21/10, B65G 47/52

(54) **VORRICHTUNG ZUM UMGANG MIT ARTIKELN SOWIE VERFAHREN ZUM TAUSCHEN MINDESTENS EINES TRANSPORTMODULS UND WENIGSTENS EINES ARBEITSMODULS DER VORRICHTUNG**
DEVICE FOR HANDLING ARTICLES AND METHOD FOR SWAPPING AT LEAST ONE TRANSPORT MODULE AND AT LEAST ONE WORKING MODULE OF THE DEVICE
DISPOSITIF DE MANIPULATION D'ARTICLES ET PROCÉDÉ D'ÉCHANGE D'AU MOINS UN MODULE DE TRANSPORT ET D'AU MOINS UN DISPOSITIF DE TRAVAIL DUDIT MODULE

(30) Priorität: 06.03.2017 DE 102017203588
(43) Veröffentlichungstag der Anmeldung: 12.09.2018
(73) Patentinhaber: Krones Aktiengesellschaft, 93073 Neutraubling (DE)
(72) Erfinder: SPINDLER, Herbert, 93073 Neutraubling (DE); WERNER, Jürgen, 93073 Neutraubling (DE); WITTMANN, Stephan, 93073 Neutraubling (DE)
(74) Vertreter: Benninger, Johannes

(56) Entgegenhaltungen:
- WO-A1-2012/062549

## Beschreibung

Die vorliegende Erfindung betrifft eine Vorrichtung mit mindestens zwei selektiv in eine Betriebsposition überführbare Module zum jeweiligen Umgang mit einzelnen Artikeln oder Zusammenstellungen an Artikeln. Weiter betrifft die vorliegende Erfindung ein Verfahren zum Tauschen mindestens eines Transportmoduls und wenigstens eines Arbeitsmoduls für eine bestimmte Betriebsposition.

Für eine Verarbeitung, Zusammenstellung, Gruppierung und Verpackung von Artikeln, wie bspw. Getränkebehältern, gibt es unterschiedliche Arten für ihre Verpackung. Derzeit bspw. als Getränkebehälter am häufigsten eingesetzte PET-Behälter weisen relativ geringe Wandstärken auf und sind auch im befüllten Zustand nicht völlig formstabil. Aus diesem Grunde und im Hinblick auf die bessere logistische Handhabbarkeit werden die verschiedensten Verpackungen für gruppierte Einzelbehälter verwendet. So können die Behälter in gruppierter Anordnung bspw. auf einen Kartonbogen gestellt werden, dessen Ränder nach oben gefalzt werden. Auch können Kartonbögen eingesetzt werden, dessen Größe mindestens der Grundfläche einer Gebindeanordnung entspricht, und auf welche die einzelnen als Bestandteil eines Gebindes ausgebildeten Behälter bzw. Getränkebehältnisse aufstehen.

Wahlweise können diese Gebindeanordnungen anschließend mit thermoplastischer Folie umhüllt werden, wobei die thermoplastische Folie mittels eines Erwärmungsprozesses anschließend auf die als Bestandteil eines jeweiligen Gebindes ausgebildeten Getränkebehältnisse geschrumpft wird, um einen stabilen Gebindeverbund zu erhalten, der leicht transportiert und gestapelt werden kann. Eine weitere Gebindevariante wird als "Shrink-only" bezeichnet, da hierbei die zusammengestellten Behälter ohne weiteres Verpackungsmaterial bzw. ohne weitere Zuschnitte mit thermoplastischer Folie umhüllt werden und die thermoplastische Folie nachfolgend auf die jeweiligen zusammengestellten Behälter aufgeschrumpft wird.

Die Formstabilität dieser Gebindevariante wird ausschließlich von der Schrumpffolie gewährleistet. Bekannte Verpackungsmaschinen und deren Fördereinrichtungen sind normalerweise jeweils auf eine bestimmte Art, Größe und/oder Kontur von Fördergütern optimiert. Zudem werden für verschiedene Gebinde- und Verpackungsarten jeweils verschiedene Fördereinrichtungen benötigt. Ein Produktwechsel kann unter Umständen dazu führen, dass bestimmte Fördereinrichtungen nicht mehr eingesetzt werden können, da sie bspw. nicht für den Transport von einzelnen Artikeln oder Behältern geeignet sind. Störungen im Transport der Artikel können auch dann auftreten, wenn die Verpackungsmaschinen auf eine jeweils andere Produktvariante eingestellt sind. Solche Förderprobleme können insbesondere bei einem Wechsel zwischen verpackten Gütern wie bspw. Gebindeeinheiten und losen Gütern wie einzelnen Getränkebehältern o. dgl. auftreten. Solche aufrecht stehend zu befördernde Artikel wie Getränkebehälter können auf Fördereinrichtungen, die für den Transport von Gebindeeinheiten vorbereitet sind, leicht kippen und/oder herabfallen, da die Transportmodule möglicherweise keine ausreichend ebenen Unterlagen bieten können, die einen stabilen Transport von Gegenständen mit sehr kleiner Grundfläche ermöglichen.

Um solche Probleme zu vermeiden, sind aus dem Stand der Technik bereits Vorrichtungen bekannt, welche mehrere Module aufweisen, die austauschbar bzw. wahlweise in einen bestimmten Abschnitt einer Transportstrecke eingebracht werden können. Eine solche Vorrichtung offenbart beispielsweise die WO 2012/062549 A1. Die in dem Dokument beschriebene Vorrichtung betrifft eine Maschine zur Verarbeitung und/oder Verpackung von Gegenständen mit einer im Wesentlichen horizontalen Transportstrecke zur Förderung von Artikeln, Gebinden und/oder Verpackungseinheiten. Die Maschine umfasst eine erste Horizontalfördereinrichtung mit wenigstens einem Transportmittel für einen ersten Betriebsmodus, welche zur Herstellung mindestens eines weiteren Betriebsmodus durch eine weitere Horizontalfördereinrichtung mit wenigstens einem zum ersten Transportmittel unterschiedlichen zweiten Transportmittel auswechselbar ist.

Die Praxis hat gezeigt, dass ein derartiges Auswechseln von Horizontalfördereinrichtungen für unterschiedliche Betriebsmodi einen gewissen Zeitaufwand erfordert, welcher zum schnellen Umrüsten einer solchen Maschine auf die unterschiedlichen Betriebsmodi nach Möglichkeit gering gehalten werden soll.

Eine Aufgabe der Erfindung kann aus diesem Grunde darin gesehen werden, eine gattungsgemäße Vorrichtung bzw. ein entsprechendes Verfahren zur Verfügung zu stellen, welche zeitoptimiert umgerüstet bzw. an unterschiedliche Betriebsmodi angepasst werden kann. Zudem soll die Vorrichtung einen einfachen Aufbau besitzen und das Verfahren einfach umgesetzt werden können.

Die obigen Aufgaben werden durch eine Vorrichtung nach Anspruch 1 und ein Verfahren nach Anspruch 11 gelöst. Weitere vorteilhafte Ausgestaltungen werden durch die Unteransprüche beschrieben.

Die Erfindung betrifft eine Vorrichtung mit mindestens zwei selektiv in eine Betriebsposition überführbaren Modulen zum jeweiligen Umgang mit einzelnen Artikeln oder Zusammenstellungen an Artikeln.

Die Vorrichtung umfasst mindestens ein Transportmodul, welches zum Bewegen für eine erste Verpackungsart vorgesehener einzelner Artikel oder Zusammenstellungen an Artikeln vorbereitet ist.

Weiter umfasst die Vorrichtung wenigstens ein Arbeitsmodul, welches zum Bewegen für eine zweite Verpackungsart, die sich von der ersten Verpackungsart unterscheidet, vorgesehener einzelner Artikel oder Zusammenstellungen an Artikeln vorbereitet ist. Das wenigstens eine Arbeitsmodul kann zudem Verpackungsmaterial, mit dem die einzelnen Artikel oder Zusammenstellungen an Artikeln während der Bewegung in Verbindung stehen, handhaben. Insbesondere kann hierbei vorgesehen sein, dass das wenigstens eine Arbeitsmodul zum Aufrichten von Laschen als Verpackungsmaterial ausgebildeter und für die einzelnen Artikel oder Zusammenstellungen an Artikeln vorgesehener Zuschnitte ausgebildet ist. Zum Aufrichten der Laschen kann das wenigstens eine Arbeitsmodul eine Vielzahl an umlaufend geführten Faltfingern umfassen. Die umlaufend geführten Faltfinger können über eine zum Transport der einzelnen Artikel oder Zusammenstellungen an Artikeln mittels der Vorrichtung ausgebildete Transportebene bzw. Förderebene auftauchen, hierbei ggf. mit einer jeweiligen Lasche in Kontakt treten und die jeweilige Lasche während des Auftauchens über die Transportebene bzw. Förderebene in eine aufrechte Orientierung überführen. Insbesondere kann das Arbeitsmodul zum Halten der aufgerichteten Laschen der als Verpackungsmaterial ausgebildeten und für die einzelnen Artikel oder Zusammenstellungen an Artikeln vorgesehenen Zuschnitte über einen bestimmten Zeitabschnitt während einer fortlaufenden Bewegung der jeweiligen einzelnen Artikel oder jeweiligen Zusammenstellung an Artikeln ausgebildet sein. Die Vielzahl an Faltfingern können zur umlaufenden Bewegung an wenigstens eine Kette bzw. Schließkette mechanisch gekoppelt sein.

Es ist zudem vorgesehen, dass die Vorrichtung eine bestimmte Betriebsposition und eine Warteposition ausbildet, in welche bestimmte Betriebsposition selektiv das mindestens eine Transportmodul oder das wenigstens eine Arbeitsmodul eingebracht werden kann und in welche Warteposition das mindestens eine Transportmodul mittels einer Entnahme aus der bestimmten Betriebsposition überführbar ist. Die Warteposition kann gegenüber der bestimmten Betriebsposition in horizontaler sowie vertikaler Richtung versetzt sein. Somit kann es sein, dass das mindestens eine Transportmodul zum Einbringen in die bestimmte Betriebsposition aus der Warteposition in horizontaler Richtung und vertikaler Richtung bewegt wird. Demnach ist denkbar, dass das mindestens eine Transportmodul zum Überführen von der bestimmten Betriebsposition in die Warteposition in horizontaler und vertikaler Richtung bewegt wird bzw. in horizontaler Richtung bewegt und in vertikaler Richtung angehoben wird. Die für das mindestens eine Transportmodul vorgesehene Warteposition kann sich daher gegenüber der bestimmten Betriebsposition auf vertikal höherem Niveau befinden.

Weiter ist vorgesehen, dass die Vorrichtung wenigstens ein aus mehreren drehbeweglich miteinander in Verbindung stehenden einzelnen Gliedern gebildetes Übertragungsmittel umfasst, welches mechanisch an das mindestens eine Transportmodul gekoppelt ist und zur Bewegung der einzelnen Artikel oder Zusammenstellungen an Artikeln mit dem mindestens einen Transportmodul in der bestimmten Betriebsposition zusammenwirkt und welches mit einem jeweiligen Wechsel des mindestens einen Transportmoduls aus der bestimmten Betriebsposition in die Warteposition und aus der Warteposition in die bestimmte Betriebsposition seine Ausrichtung entlang seines Umfangsverlaufs flexibel anpassen kann. insbesondere kann das mindestens eine Transportmodul über wenigstens eine Umlenkrolle an das aus mehreren drehbeweglich miteinander in Verbindung stehenden einzelnen Gliedern gebildete Übertragungsmittel mechanisch gekoppelt sein. Die wenigstens eine Umlenkrolle kann mit dem aus mehreren drehbeweglich miteinander in Verbindung stehenden einzelnen Gliedern gebildeten Übertragungsmittel in Eingriff stehen. Denkbar ist hierbei, dass die wenigstens eine Umlenkrolle eine Verzahnung ausbildet, über welche Verzahnung die wenigstens eine Umlenkrolle mit dem aus mehreren drehbeweglich miteinander in Verbindung stehenden einzelnen Gliedern gebildeten Übertragungsmittel in Eingriff steht. Bewährt haben sich in der Praxis Ausführungsformen, bei welchen das mindestens eine Transportmodul wenigstens zwei Umlenkrollen umfasst, die jeweils mit einem gemeinsamen aus mehreren drehbeweglich miteinander in Verbindung stehenden einzelnen Gliedern gebildeten Übertragungsmittel in Eingriff stehen.

In bevorzugten Ausführungsformen kann die Vorrichtung einen Arbeitsmechanismus umfassen, über welchen Arbeitsmechanismus das mindestens eine Transportmodul selbständig aus der bestimmten Betriebsposition entnommen und in die Warteposition überführt werden kann sowie aus der Warteposition selbständig in die bestimmte Betriebsposition eingebracht werden kann. Wie vorhergehend bereits erwähnt ist vorstellbar, dass das mindestens eine Transportmodul zum Überführen in die Warteposition sowie zum Einbringen in die bestimmte Betriebsposition jeweils horizontal und vertikal bewegt wird. Der Arbeitsmechanismus kann aus diesem Grunde ggf. eine horizontale sowie vertikale Bewegung für das mindestens eine Transportmodul herbeiführen.

Alternativ oder ergänzend kann es sein, dass über den Arbeitsmechanismus das wenigstens eine Arbeitsmodul selbständig aus der bestimmten Betriebsposition in eine für das zweite Arbeitsmodul vorgesehene weitere Warteposition überführt werden kann sowie aus der für das wenigstens eine Arbeitsmodul vorgesehenen weiteren Warteposition selbständig in die bestimmte Betriebsposition eingebracht werden kann. Insbesondere kann die weitere für das wenigstens eine Arbeitsmodul vorgesehene Warteposition unterhalb einer für die einzelnen Artikel oder Zusammenstellungen an Artikeln durch die Vorrichtung ausgebildeten Förderebene bzw. Transportebene positioniert sein. Hierbei kann es sein, dass das wenigsten eine Arbeitsmodul über den Arbeitsmechanismus selbständig unter die für die einzelnen Artikel oder Zusammenstellungen an Artikeln durch die Vorrichtung ausgebildete Förderebene bzw. Transportebene absenkbar ist.

Wie erwähnt, kann es sein, dass die Vorrichtung für die einzelnen Artikel oder Zusammenstellungen an Artikeln eine horizontale Bewegungsebene bzw. Förderebene und/oder Transportebene ausbildet, wobei die Warteposition, in welche das mindestens eine Transportmodul aus der bestimmten Betriebsposition überführbar ist, oberhalb der horizontalen Bewegungsebene bzw. Förderebene und/oder Transportebene positioniert bzw. angeordnet ist und/oder wobei eine für das wenigstens eine Arbeitsmodul ausgebildete Warteposition unterhalb der horizontalen Bewegungsebene bzw. Transportebene und/oder Förderebene positioniert bzw. angeordnet ist.

Auch ist denkbar, dass das mindestens eine Transportmodul eine horizontale Transportfläche umfasst und dass an das wenigstens eine aus mehreren drehbeweglich miteinander in Verbindung stehenden einzelnen Gliedern gebildete Übertragungsmittel eine Vielzahl an umlaufend geführten Transportelementen gekoppelt ist. Die Vielzahl an umlaufend geführten Transportelementen kann zur gleitenden Bewegung der einzelnen Artikel oder Zusammenstellungen an Artikeln über die horizontale Transportfläche des in die bestimmte Betriebsposition eingebrachten mindestens einen Transportmoduls ausgebildet sein. Die Vielzahl an umlaufend geführten Transportelementen kann durch eine Vielzahl an Einteilstäben ausgebildet sein, welche Einteilstäbe die jeweiligen einzelnen Artikel oder Zusammenstellungen an Artikeln entlang der horizontalen Transportfläche schieben. Die horizontale Transportfläche kann durch eine als Bestandteil des Transportmoduls ausgebildete Überschubplatte bereitgestellt werden. Insbesondere können wenigstens ein Paar an jeweils aus mehreren drehbeweglich miteinander in Verbindung stehenden einzelnen Gliedern gebildeten Übertragungsmitteln vorgesehen sein, wobei ein jeweiliges Transportelement der Vielzahl bzw. ein jeweiliger Einteilstab der Vielzahl an das Paar an jeweils aus mehreren drehbeweglich miteinander in Verbindung stehenden einzelnen Gliedern bestehenden Übertragungsmitteln mechanisch gekoppelt ist und über das Paar an jeweils aus mehreren drehbeweglich miteinander in Verbindung stehenden einzelnen Gliedern bestehenden Übertragungsmitteln umlaufend bewegt wird.

Auch kann es sein, dass das mindestens eine Transportmodul wenigstens zwei sich gegenüberliegende Führungswände umfasst, wobei ein relativer Abstand der wenigstens zwei sich gegenüberliegenden Führungswände zur Vorgabe wenigstens einer bestimmten sich entlang der horizontalen Transportfläche erstreckenden Transportspurt für die einzelnen Artikel oder Zusammenstellungen an Artikeln angepasst werden kann. Zur Anpassung des relativen Abstandes können die wenigstens zwei sich gegenüberliegenden Führungswände ggf. an wenigstens einen Aktor gekoppelt sein, wobei der Aktor mit einer Steuerungseinheit in Verbindung steht und ein relativer Abstand der wenigstens zwei sich gegenüberliegenden Führungswände über den Aktor und auf Veranlassung der Steuerungseinheit angepasst werden kann.

In diversen Ausführungsformen kann es sein, dass die Warteposition, in welche das mindestens eine Transportmodul aus der bestimmten Betriebsposition überführbar ist, derart ausgebildet ist, dass sich die horizontale Transportfläche bzw. Überschubplatte des mindestens einen Transportmoduls in der Warteposition oberhalb einer zur Bewegung der Artikel oder Zusammenstellungen an Artikeln mittels der Vorrichtung ausgebildeten horizontalen Förderebene bzw. horizontalen Bewegungsebene und/oder horizontalen Transportebene befindet. Zudem kann die Warteposition derart ausgebildet sein, dass die Vielzahl an Transportelementen bzw. Einteilstäben ggf. die einzelnen Artikel oder Zusammenstellungen an Artikeln unter vorzugsweise rückseitiger Anlage zumindest abschnittsweise entlang der horizontalen Förderebene bewegen und/oder unter vorzugsweise rückseitiger Anlage zumindest abschnittsweise entlang der horizontalen Förderebene begleiten kann.

Wie bereits erwähnt, kann das wenigstens eine in die bestimmte Betriebsposition eingebrachte Arbeitsmodul mehrere umlaufend geführte Faltfinger umfassen, über welche mehreren umlaufend geführten Faltfinger Laschen von mit den einzelnen Artikeln oder den Zusammenstellungen an Artikeln in Verbindung stehenden Verpackungszuschnitten während der Bewegung der jeweiligen einzelnen Artikel oder Zusammenstellungen an Artikeln aufgerichtet werden können.

Darüber hinaus kann die Vorrichtung ggf. wenigstens eine vorzugsweise als Umlenkung ausgebildete Führung für das wenigstens eine aus mehreren drehbeweglich miteinander in Verbindung stehenden einzelnen Gliedern gebildetes Übertragungsmittel umfassen, welche wenigstens eine vorzugsweise als Umlenkung ausgebildete Führung zum Einwirken auf die Ausrichtung entlang des Umfangsverlaufs des aus mehreren drehbeweglich miteinander in Verbindung stehenden einzelnen Gliedern gebildeten Übertragungsmittels mindestens zwei unterschiedliche und auf einen Wechsel des mindestens einen Transportmoduls aus der bestimmten Betriebsposition in die Warteposition und aus der Warteposition in die bestimmte Betriebsposition abgestimmte Lage einnehmen kann. Denkbar ist hierbei, dass die Vorrichtung mindestens einen Aktor umfasst, über welchen die vorzugsweise als Umlenkung ausgebildete Führung zum Wechsel aus einer ersten Lage in eine zweite Lage bewegt werden kann. Die erste Lage kann gegenüber der zweiten Lage in horizontaler und/oder vertikaler Richtung versetzt sein. Insbesondere kann dem mindestens einen Transportmodul für die Warteposition eine erste definierte Lage zugeordnet sein und für die bestimmte Betriebsposition eine zweite definierte Lage, wobei die erste definierte Lage und die zweite definierte Lage ggf. in horizontaler und/oder vertikaler Richtung zueinander versetzt sind und eine Bewegung der vorzugsweise als Umlenkung ausgebildeten Führung über den Aktor bewirkt wird.

Die Erfindung betrifft darüber hinaus ein Verfahren zum Tauschen mindestens eines Transportmoduls und wenigstens eines Arbeitsmoduls für eine Betriebsposition. Merkmale, welche vorhergehend zu diversen Ausführungsformen der Vorrichtung beschrieben wurden, können auch für diverse Ausführungsformen des erfindungsgemäßen Verfahrens vorgesehen sein und werden daher nicht erneut erwähnt. Ebenso können nachfolgend genannte Merkmale, welche diverse Ausführungsformen des Verfahrens betreffen, ggf. für die vorherig bereits beschriebene Vorrichtung Verwendung finden.

Es ist vorgesehen, dass entlang des mindestens einen Transportmoduls in der Betriebsposition einzelne Artikel oder Zusammenstellungen an Artikeln, welche für eine erste Verpackungsart vorgesehen sind, bewegt werden. Die einzelnen Artikel können durch einzelne Getränkebehältnisse ausgebildet sein. Weiter können die Zusammenstellungen an Artikeln durch Zusammenstellungen an Getränkebehältnissen ausgebildet sein. Weiter ist vorgesehen, dass das wenigstens eine Arbeitsmodul in der Betriebsposition einzelne Artikel oder Zusammenstellungen an Artikeln, die für eine jeweilige zweite Verpackungsart vorgesehen sind, welche sich von der ersten Verpackungsart unterscheidet, bewegt werden und welches wenigstens eine Arbeitsmodul in der Betriebsposition Verpackungsmaterial, das mit den einzelnen Artikeln oder Zusammenstellungen an Artikeln in Verbindung steht, zeitlich während der Bewegung der einzelnen Artikel oder Zusammenstellungen an Artikeln handhabt. Somit kann es sein, dass einzelne Artikel oder Zusammenstellungen an Artikeln mittels des in die Betriebsposition eingebrachten wenigstens einen Arbeitsmoduls bewegt werden, wobei das wenigstens eine in die Betriebsposition eingebrachte Arbeitsmodul zeitlich während der Bewegung der einzelnen Artikel oder Zusammenstellungen an Artikeln Verpackungsmaterial, mit welchem die einzelnen Artikel oder Zusammenstellungen an Artikeln während ihrer Bewegung durch das wenigstens eine Arbeitsmoduls in Verbindung stehen, handhabt.

Ein Schritt des Verfahrens sieht eine Entnahme des mindestens einen in die bestimmte Betriebsposition eingebrachten Transportmoduls aus der bestimmten Betriebsposition, ein Überführen des mindestens einen Transportmoduls in eine Warteposition und ein Einbringen des wenigstens einen Arbeitsmoduls in die bestimmte Betriebsposition vor.

Zeitlich hierauf folgt ein weiterer Schritt, welcher eine Entnahme des wenigstens einen in die bestimmte Betriebsposition eingebrachten Arbeitsmoduls aus der bestimmten Betriebsposition und ein Einbringen des mindestens einen in der Warteposition befindlichen Transportmoduls in die bestimmte Betriebsposition vorsieht. Somit können das mindestens eine Transportmodul und das wenigstens eine Arbeitsmodul für die bestimmte Betriebsposition ausgetauscht werden.

Auch ist vorgesehen, dass das mindestens eine in die bestimmte Betriebsposition eingebrachte Transportmodul zur Bewegung der einzelnen Artikel oder Zusammenstellungen an Artikeln mit wenigstens einem aus mehreren drehbeweglich miteinander in Verbindung stehenden einzelnen Gliedern gebildeten Übertragungsmittel zusammenwirkt. Das aus mehreren drehbeweglich miteinander in Verbindung stehenden einzelnen Gliedern gebildete Übertragungsmittel kann durch wenigstens eine Kette ausgebildet sein.

Zudem ist vorgesehen, dass zeitlich bei Entnahme des mindestens einen Transportmoduls aus der bestimmten Betriebsposition und zeitlich bei Einbringen des mindestens einen Transportmoduls in die bestimmte Betriebsposition
a) eine zwischen dem wenigstens eine aus mehreren drehbeweglich miteinander in Verbindung stehenden einzelnen Gliedern gebildeten Übertragungsmittel und dem mindestens einen Transportmodul ausgebildete mechanische Verbindung aufrechterhalten wird und
b) das wenigstens eine aus mehreren drehbeweglich miteinander in Verbindung stehenden einzelnen Gliedern gebildete Übertragungsmittel seine Ausrichtung entlang seines Umfangsverlaufs flexibel anpasst.

Im Verlauf bzw. während der flexiblen Anpassung können einzelne Glieder des aus mehreren drehbeweglich miteinander in Verbindung stehenden einzelnen Gliedern gebildeten Übertragungsmittels relativ zueinander verschwenken.

In diversen Ausführungsformen kann es sein, dass das mindestens eine in die bestimmte Betriebsposition eingebrachte Transportmodul über einen Arbeitsmechanismus selbständig aus der bestimmten Betriebsposition entnommen und in die Warteposition überführt wird. Weiter kann es sein, dass das wenigstens eine Arbeitsmodul über den Arbeitsmechanismus selbständig in die bestimmte Betriebsposition eingebracht wird. Insbesondere ist denkbar, dass das wenigstens eine Arbeitsmodul zum Einbringen in die bestimmte Betriebsposition selbständig über den Arbeitsmechanismus angehoben wird. Auch kann es sein, dass das mindestens eine in die bestimmte Betriebsposition eingebrachte Transportmodul zur Überführung in die Warteposition aus der bestimmten Betriebsposition angehoben wird.

Ergänzend oder alternativ hierzu kann es sein, dass das wenigstens eine in die bestimmte Betriebsposition eingebrachte Arbeitsmodul über einen Arbeitsmechanismus selbständig aus der bestimmten Betriebsposition entnommen wird und dass das mindestens eine in der Warteposition befindliche Transportmoduls über den Arbeitsmechanismus selbständig in die bestimmte Betriebsposition eingebracht wird. Insbesondere haben sich hierbei Ausführungsformen bewährt, bei welchen das wenigstens eine in die bestimmte Betriebsposition eingebrachte Arbeitsmodul über den Arbeitsmechanismus zur Entnahme nach unten abgesenkt und in eine für das wenigstens eine Arbeitsmodul vorgesehene Warteposition überführt wird. Auch kann es sein, dass das mindestens eine in der Warteposition befindliche Transportmodul zum Einbringen in die bestimmte Betriebsposition in Richtung nach unten abgesenkt wird.

Somit kann es sein, dass das mindestens eine in die bestimmte Betriebsposition eingebrachte Transportmodul bei der Entnahme aus der bestimmten Betriebsposition in Richtung nach oben angehoben wird und hierbei in die Warteposition gelangt, welche Warteposition oberhalb einer für die einzelnen Artikel oder Zusammenstellungen an Artikeln ausgebildeten horizontalen Bewegungsebene angeordnet ist. Auch kann es somit sein, dass das wenigstens eine in die bestimmte Betriebsposition eingebrachte Arbeitsmodul bei der Entnahme aus der bestimmten Betriebsposition in Richtung nach unten abgesenkt wird und hierbei in eine für das wenigstens eine Arbeitsmodul vorgesehene Warteposition gelangt, welche für das wenigstens eine Arbeitsmodul vorgesehene Warteposition unterhalb einer für die einzelnen Artikel oder Zusammenstellungen an Artikeln ausgebildeten horizontalen Bewegungsebene angeordnet ist.

Erfindungsgemäß treibt das aus mehreren drehbeweglich miteinander in Verbindung stehenden einzelnen Gliedern gebildete Übertragungsmittel eine Vielzahl an Transportelementen umlaufend an, welche Vielzahl an Transportelementen die einzelnen Artikel oder Zusammenstellungen an Artikeln über eine als Bestandteil des mindestens einen in die bestimmte Betriebsposition eingebrachten mindestens einen Transportmoduls ausgebildete horizontale Transportfläche bzw. horizontale Überschubplatte gleitend und vorzugsweise unter jeweiliger rückseitiger Anlage bewegen.

Weiter ist nach der Erfindung das mindestens eine bestimmte Transportmodul aus der bestimmten Betriebsposition entnehmbar bzw. wird entnommen und ist in die Warteposition überführbar bzw. wird in die Warteposition überführt, wobei die Vielzahl an Transportelementen zeitlich nach Überführung des mindestens einen Transportmoduls in die Warteposition einzelne Artikel oder Zusammenstellungen an Artikeln unter vorzugsweise rückseitiger Anlage entlang einer horizontalen Bewegungsebene bzw. horizontalen Förderebene bewegen und/oder unter vorzugsweise rückseitiger Anlage entlang einer horizontalen Förderebene begleiten. In der Praxis haben sich hierbei Ausführungsformen bewährt, bei welchen dem in die bestimmte Betriebsposition eingebrachten wenigstens einen Arbeitsmodul ein Zulauf unmittelbar vorgeordnet ist, wobei die Vielzahl an Transportelementen die einzelnen Artikel oder Zusammenstellungen an Artikeln unter vorzugsweise rückseitiger Anlage entlang des Zulaufs bewegen. Unmittelbar vor und/oder bei Übertritt der einzelnen Artikel oder Zusammenstellungen an Artikeln vom Zulauf auf das wenigstens eine in die bestimmte Betriebsposition eingebrachte Arbeitsmodul können einzelne Transportelemente der Vielzahl ihren Kontakt zum jeweiligen einzelnen Artikel oder zur jeweiligen Zusammenstellung an Artikeln verlieren. Hierbei können die einzelnen Transportelemente der Vielzahl über das wenigstens eine aus mehreren drehbeweglich miteinander in Verbindung stehenden einzelnen Gliedern gebildete Übertragungsmittel in Richtung nach oben vom jeweiligen einzelnen Artikel bzw. von der jeweiligen Zusammenstellung an Artikeln abgezogen bzw. weggeführt werden.

Zudem kann das wenigstens eine in die bestimmte Betriebsposition eingebrachte Arbeitsmodul über mehrere umlaufend geführte Faltfinger Laschen von mit den einzelnen Artikeln oder Zusammenstellungen an Artikeln in Verbindung stehenden Verpackungszuschnitten aufrichten und mittels der umlaufend geführten Faltfinger die einzelnen Artikel oder Zusammenstellungen an Artikeln während des Aufrichtens der Laschen bewegen. Denkbar ist hierbei, dass die einzelnen Artikel oder Zusammenstellungen an Artikeln während der Bewegung über die umlaufend geführten Faltfinger zumindest zeitweise durch ein jeweiliges Transportelement unter vorzugsweise rückseitiger Anlage begleitet werden.

Weiter kann in diversen Ausführungsformen des Verfahrens eine vorzugsweise als Umlenkung ausgebildete Führung für das wenigstens eine aus mehreren drehbeweglich miteinander in Verbindung stehenden einzelnen Gliedern gebildete Übertragungsmittel vorgesehen sein, wobei eine Lage der vorzugsweise als Umlenkung ausgebildeten Führung zum Einwirken auf die Ausrichtung entlang des Umfangsverlaufs des aus mehreren drehbeweglich miteinander in Verbindung stehenden einzelnen Gliedern gebildeten Übertragungsmittels im Rahmen eines Wechsels des mindestens einen Transportmoduls aus der bestimmten Betriebsposition in die Warteposition und aus der Warteposition in die bestimmte Betriebsposition jeweils verstellt wird. Zur Verstellung kann die vorzugsweise als Umlenkung ausgebildete Führung in vertikaler Richtung und/oder in horizontaler Richtung bewegt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform einer erfindungsgemäßen Vorrichtung.
Fig. 2 zeigt eine weitere schematische Perspektivansicht der Ausführungsform der Vorrichtung aus Fig. 1.
Fig. 3 zeigt eine schematische Seitenansicht der Ausführungsform der Vorrichtung aus den Figuren 1 und 2.
Fig. 4 zeigt eine weitere schematische Seitenansicht der Vorrichtung aus den Figuren 1 bis 3 unter Verdeutlichung weiterer Aspekte.
Fig. 5 zeigt eine weitere schematische Perspektivansicht der Ausführungsform der Vorrichtung aus den Figuren 1 bis 4, bei welcher sich das Transportmodul in der bestimmten Betriebsposition befindet.
Fig. 6 zeigt eine weitere schematische Seitenansicht der Ausführungsform der Vorrichtung aus den Figuren 1 bis 5, wobei sich das Transportmodul in der bestimmten Betriebsposition befindet.
Fig. 7 zeigt eine weitere schematische Perspektivansicht der Vorrichtung aus den Figuren 1 bis 6, wobei sich das Transportmodul in der bestimmten Betriebsposition befindet.
Fig. 8 zeigt das Transportmodul der Vorrichtung des Ausführungsbeispiels aus den Figuren 1 bis 7, wobei in Fig. 8 das Transportmodul in der Warteposition sowie in der bestimmten Betriebsposition zu erkennen ist.
Fig. 9 zeigt eine schematische Perspektivansicht eines Transportmoduls, wie es für diverse Ausführungsformen der erfindungsgemäßen Vorrichtung vorgesehen sein kann.
Fig. 10 zeigt eine weitere schematische Perspektivansicht des Transportmoduls aus Fig. 9 unter Verdeutlichung weiterer Aspekte.
Fig. 11 zeigt eine schematische Perspektivansicht von unten auf das Transportmodul aus Figuren 9 und 10.

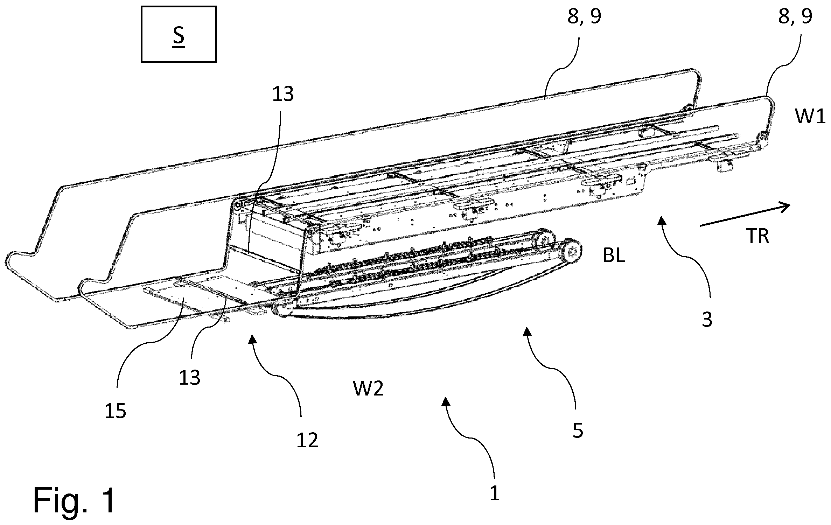

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung und stellen keine abschließende Begrenzung dar. Auch wird darauf hingewiesen, dass die nachfolgend zu den Figuren 1 bis 11 beschriebenen Merkmale nicht isoliert für das jeweilige Ausführungsbeispiel zu verstehen sind sondern im allgemeinen Zusammenhang Verwendung finden können.

Die Fig. 1 zeigt eine schematische Perspektivansicht einer Ausführungsform einer erfindungsgemäßen Vorrichtung 1. Die Vorrichtung 1 ist ausgebildet zum Verpacken von Zusammenstellungen an Artikeln, welche Artikel durch Getränkebehältnisse ausgebildet und in den Figuren vorliegender Patentanmeldung aus Gründen der Übersichtlichkeit nicht mit dargestellt sind. Mittels der Vorrichtung 1 kann daher auf eine jeweilige Zusammenstellung an Getränkebehältnissen ein als Zuschnitt ausgebildetes Verpackungsmaterial aufgebracht werden. Insbesondere ist die Vorrichtung 1 aus Fig. 1 dazu ausgebildet, eine jeweilige Zusammenstellung an Getränkebehältnissen auf einen als Tray oder PAD ausgebildeten Zuschnitt an Verpackungsmaterial während einer kontinuierlichen bzw. unterbrechungsfreien Bewegung der jeweiligen Zusammenstellung an Getränkebehältnissen aufzusetzen.

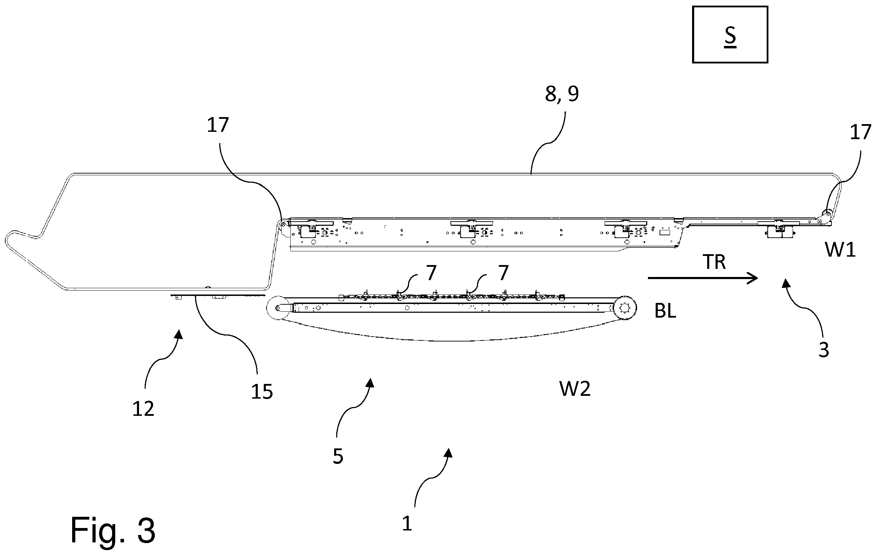

Die Vorrichtung 1 umfasst ein Arbeitsmodul 5, welches sich in Fig. 1 in einer Betriebsposition BL befindet, über welches Zusammenstellungen an Artikeln bewegt werden können und welches über eine Vielzahl an umlaufend geführten Faltfingern 7 (vgl. Fig. 3) vordere und hintere Laschen eines einer jeweiligen Zusammenstellung an Getränkebehältnissen zugeordneten Trays aufrichten kann.

Zwei parallel zueinander orientierte und jeweils aus mehreren drehbeweglich miteinander in Verbindung stehenden einzelnen Gliedern gebildete Übertragungsmittel 8 sind als Kette 9 ausgebildet. An die Übertragungsmittel 8 bzw. Ketten 9 sind eine Vielzahl an Einteilstäben 13 mechanisch gekoppelt und werden via die Übertragungsmittel 8 bzw. Ketten 9 umlaufend bewegt. Hierbei treten die Einteilstäbe 13 im Bereich eines Zulaufs 12 mit einer jeweiligen Zusammenstellung an Getränkebehältnissen rückseitig in Oberflächenkontakt und schieben die jeweilige Zusammenstellung an Getränkebehältnissen sodann über die Gleitplatte 13 in Richtung des in der Betriebsposition BL befindlichen Arbeitsmoduls 5. Bei Übertritt einer jeweiligen Zusammenstellung an Getränkebehältnissen von der Gleitplatte 15 auf das Arbeitsmodul 5 verlässt der jeweilige Einteilstab 13 die jeweilige Zusammenstellung an Getränkebehältnissen in Richtung nach oben. Weiter fährt die jeweilige Zusammenstellung an Getränkebehältnissen bei Übertritt von der Gleitplatte 13 auf das Transportmodul 5 auf einen jeweiligen Zuschnitt an Verpackungsmaterial auf, welcher bei in der Betriebsposition BL befindlichem Arbeitsmodul 5 als Tray ausgebildet ist. Wie vorhergehend bereits erwähnt, besitzt der Zuschnitt an Verpackungsmaterial vordere und hintere Laschen, welche über eine Vielzahl an als Bestandteil des Arbeitsmoduls 5 ausgebildete Faltfinger 7 (vgl. Fig. 3) während eines fortlaufenden bzw. unterbrechungsfreien Transportes der jeweiligen auf dem Zuschnitt an Verpackungsmaterial bzw. dem Tray aufstehenden Zusammenstellung an Getränkebehältnissen in Richtung nach oben gefaltet werden. Fig. 1 verdeutlicht somit, dass die über das Übertragungsmittel 8 bzw. die Kette 9 umlaufend bewegten Einteilstäbe 13 Zusammenstellungen an Getränkebehältnissen bewegen können, wenn sich das Arbeitsmodul 5 in der bestimmten Betriebsposition BL befindet bzw. wenn das Arbeitsmodul 5 in die bestimmte Betriebsposition BL überführt wurde. Die Bewegung der Zusammenstellungen an Getränkebehältnissen über die Einteilstäbe 13 ist hierbei auf den Bereich des Zulaufs 12 beschränkt.

Aus Gründen der Vollständigkeit sei erwähnt, dass die Einteilstäbe 13 eine jeweilige Zusammenstellung an Getränkebehältnissen nicht zwingend bei Übertritt von der Gleitplatte 13 auf das Arbeitsmodul 5 verlassen müssen. Denkbar ist auch, dass die Einteilstäbe 13 die Zusammenstellungen an Getränkebehältnissen nach Übertritt auf das Arbeitsmodul 5 weiterhin begleiten bzw. ggf. weiterhin mit wenigstens einem Getränkebehältnis einer jeweiligen Zusammenstellung rückseitig in Anlage stehen. Zeitgleich können aufgerichtete vordere und hintere Laschen eines einer jeweiligen Zusammenstellung an Getränkebehältnissen zugeordneten Zuschnitts an Verpackungsmaterial über die Faltfinger 7 in einer aufrechten Orientierung gehalten werden.

Bestandteil der Vorrichtung 1 ist zudem ein Transportmodul, welches beispielhaft unter Verweis mit Ziffer 3 dargestellt ist. An das Transportmodul 3 ist das aus mehreren drehbeweglich miteinander in Verbindung stehenden einzelnen Gliedern gebildete Übertragungsmittel 8 bzw. die Kette 9 mechanisch gekoppelt. Weiter befindet sich das Transportmodul 3 in Fig. 1 in einer Warteposition W1, in welcher das Transportmodul 3 für ein Bewegen der Zusammenstellungen an Getränkebehältnissen außer Funktion gesetzt ist.

Auch ist eine weitere Warteposition W2 angedeutet, welche weitere Warteposition W2 sich unterhalb einer für die Zusammenstellungen an Getränkebehältnissen ausgebildeten Transportebene bzw. Förderebene befindet. In die weitere Warteposition W2 kann das Arbeitsmodul 5 aus der bestimmten Betriebsposition BL gemäß Fig. 1, wie nachfolgend noch beschrieben, wechseln. Auch kann das Transportmodul 3 von der Warteposition W1, wie nachfolgend noch beschrieben, in die bestimmte Betriebsposition BL wechseln bzw. in die bestimmte Betriebsposition BL eingebracht werden. Für einen Wechsel des Arbeitsmoduls 5 aus der bestimmten Betriebsposition BL in die weitere Warteposition W2 und vice versa sowie für einen Wechsel des Transportmoduls 3 aus der Warteposition W1 in die bestimmte Betriebsposition BL und vice versa wird mindestens ein Aktor über die Steuerungseinheit S betätigt. Das jeweilige Wechseln bzw. Einbringen des Arbeitsmoduls 5 bzw. Transportmoduls 3 aus der Warteposition W1 bzw. weiteren Warteposition W2 in die bestimmte Betriebsposition BL sowie das jeweilige Wechseln des Arbeitsmoduls 5 bzw. Transportmoduls 3 aus der bestimmten Betriebsposition BL in die Warteposition W1 bzw. weitere Warteposition W2 erfolgt daher auf Veranlassung der Steuerungseinheit S automatisch unter Zuhilfenahme mindestens eines Aktors, welcher mit dem Transportmodul 3 und dem Arbeitsmodul 5 in Verbindung steht bzw. welcher an das Transportmodul 3 und das Arbeitsmoduls 5 gekoppelt ist.

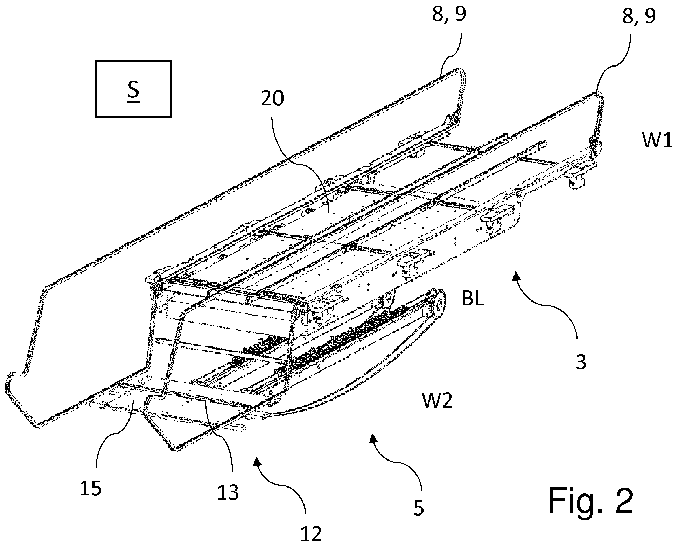

Die Fig. 2 zeigt eine weitere schematische Perspektivansicht der Ausführungsform einer erfindungsgemäßen Vorrichtung 1 aus Fig. 1. In Fig. 2 ist nochmals der parallele Verlauf der aus mehreren drehbeweglich miteinander in Verbindung stehenden einzelnen Gliedern gebildeten Übertragungsmittel 8 bzw. Ketten 9 gut zu erkennen. Weiterhin befindet sich das Transportmodul 3 in Fig. 2 in der Warteposition W1, wohingegen das Arbeitsmodul 5 in der Betriebsposition BL angeordnet ist.

Zudem zeigt die Fig. 2 eine als Bestandteil des Transportmoduls 3 ausgebildete Überschubplatte 20. Nachdem das Arbeitsmodul 5 in die weitere Warteposition W2 gewechselt hat und nachdem das Transportmodul 3 in die Betriebsposition BL überführt worden ist, können Zusammenstellungen an Getränkebehältnissen mittels der Einteilstäbe 13 entlang der Überschubplatte 20 des Transportmoduls 3 geschoben werden. Befindet sich das Transportmodul 3 in der Warteposition W1, ist die Überschubplatte 20 über einer für die Zusammenstellungen an Getränkebehältnissen ausgebildeten Transportebene bzw. Förderebene angeordnet, so dass hierbei keine Bewegung der Zusammenstellungen an Getränkebehältnissen unter Oberflächenkontakt mit der Überschubplatte 20 vorgesehen ist.

Das aus mehreren drehbeweglich miteinander in Verbindung stehenden einzelnen Gliedern gebildete Übertragungsmittel 8 bzw. die Kette 9 ist somit an das Transportmodul 3 mechanisch gekoppelt, welche mechanische Koppelung sowohl in der Warteposition W1 als auch in der Betriebsposition BL ausgebildet ist und während des Überführens des Transportmoduls 3 von der Warteposition W1 in die bestimmte Betriebsposition BL und vice versa weiterhin ausgebildet bleibt.

Die Fig. 3 zeigt eine schematische Seitenansicht der Ausführungsform einer Vorrichtung 1 aus den Figuren 1 und 2. Das Transportmodul 3 ist weiterhin in der Warteposition W1 angeordnet, wohingegen sich das Arbeitsmodul 5 weiterhin in der bestimmten Betriebsposition BL befindet.

In der Fig. 3 sind nun die mehreren umlaufend geführten und als Bestandteil des Arbeitsmoduls 5 ausgebildeten Faltfinger 7 zu erkennen, welche vordere und hintere Laschen eines jeweiligen flächigen Verpackungszuschnitts während einer fortlaufenden Bewegung der jeweiligen auf dem flächigen Verpackungszuschnitt stehenden Zusammenstellung an Getränkebehältnissen aufrichten.

Bei einem jeweiligen Übertritt vom Zulauf 12 bzw. der Gleitplatte 15 auf das Arbeitsmodul 5 fährt eine jeweilige Zusammenstellung an Artikeln bzw. Getränkebehältnissen auf einen jeweiligen Zuschnitt auf. Bis zum Übertritt der jeweiligen Zusammenstellung an Getränkebehältnissen auf das Arbeitsmodul 5 wird die jeweilige Zusammenstellung an Getränkebehältnissen unter rückseitiger Anlage an einem jeweiligen Einteilstab 13 (vgl. Figuren 1 und 2) über den Zulauf 12 bzw. die Gleitplatte 15 geschoben. Nach Übertritt auf das Arbeitsmodul 5 bewegen die umlaufend geführten Faltfinger 7 die jeweilige Zusammenstellung an Getränkebehältnissen zusammen mit ihrem jeweiligen flächigen Verpackungszuschnitt bzw. Tray und halten die aufgerichteten Laschen während einer Bewegung entlang des Arbeitsmoduls 5 in einer aufgerichteten Orientierung. In der Praxis kann auf den jeweiligen flächigen Verpackungszuschnitt bzw. auf das jeweilige Tray zeitlich vor dem Aufrichten der vorderen und hinteren Laschen eine Klebstoffverbindung aufgetragen werden, so dass die vordere und hintere Lasche eines jeweiligen flächigen Verpackungszuschnittes bzw. eines jeweiligen Trays nach dem Aufrichten stoffschlüssig festgesetzt werden.

Aus der Darstellung der Fig. 3 ergibt sich zudem, dass die Zusammenstellungen an Artikeln bzw. Getränkebehältnissen im Verlauf ihrer Bewegung über den Zulauf 12 sowie über das in die Betriebsposition BL eingebrachte und an den Zulauf 12 anschließende Arbeitsmodul 5 ihr horizontales Niveau beibehalten bzw. weder in vertikaler Richtung angehoben noch in vertikaler Richtung abgesenkt werden. Der Zulauf 12 bzw. die Gleitplatte 15 und das Arbeitsmodul 5 bilden somit jeweils eine horizontale Förderebene für Zusammenstellungen an Getränkebehältnissen aus, wobei sich die über den Zulauf 12 bzw. die Gleitplatte 15 ausgebildete horizontale Förderebene für Zusammenstellungen an Getränkebehältnissen und die über das Arbeitsmodul 5 ausgebildete horizontale Förderebene für Zusammenstellungen an Getränkebehältnissen auf zumindest näherungsweise identischem vertikalen Höhenniveau befinden. Die umlaufende Bewegung der als Bestandteil des in der bestimmten Betriebsposition BL befindlichen Arbeitsmoduls 5 ausgebildeten Faltfinger 7 sowie die umlaufende Bewegung des Übertragungsmittels 8 bzw. der Kette 9 werden über die Steuerungseinheit S aufeinander abgestimmt.

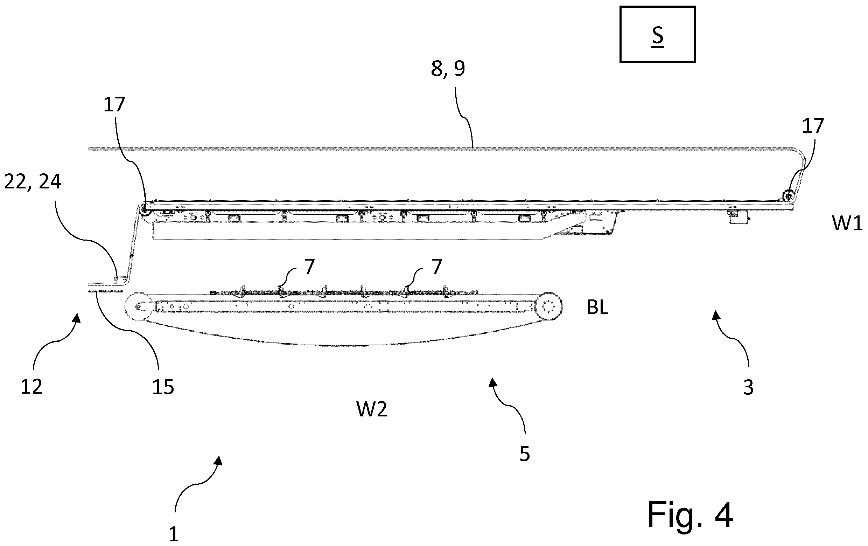

Die Fig. 4 zeigt eine weitere schematische Seitenansicht der Vorrichtung 1 aus den Figuren 1 bis 3 unter Verdeutlichung weiterer Aspekte. Insbesondere zeigt Fig. 4 weitere Details der Darstellung aus Fig. 3. Über die einzelnen Aspekte aus Fig. 3 hinausgehend lässt Fig. 4 eine Führung 22 für das aus mehreren drehbeweglich miteinander in Verbindung stehenden einzelnen Gliedern gebildete Übertragungsmittel 8 bzw. die Kette 9 erkennen. Die Führung 22 ist als Umlenkung 24 ausgebildet und steht mechanisch mit dem Übertragungsmittel 8 bzw. der Kette 9 in Eingriff.

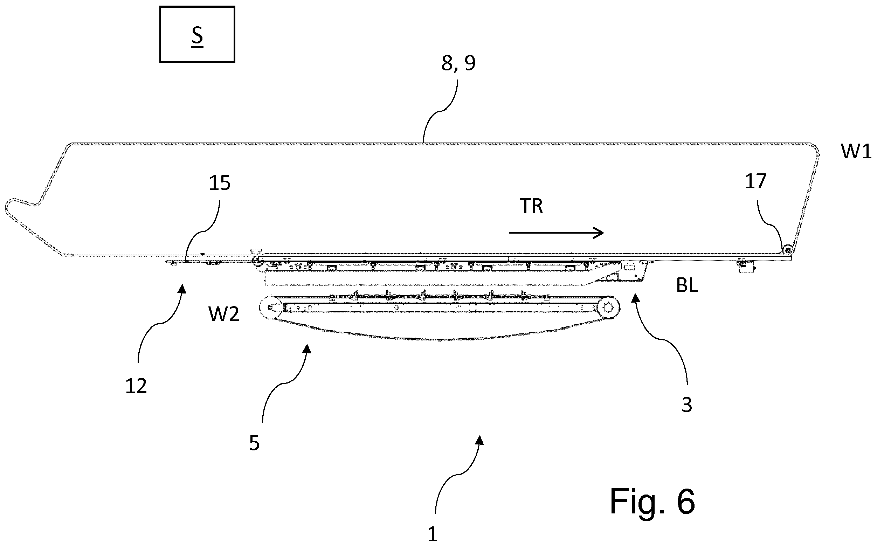

Eine Zusammenschau der Figuren 4 und 6 verdeutlicht, dass das Transportmodul 3 aus der Warteposition W1 in die Betriebsposition BL wechseln bzw. aus der Warteposition W1 in die Betriebsposition BL überführt werden kann. Das aus mehreren drehbeweglich miteinander in Verbindung stehenden einzelnen Gliedern gebildete Übertragungsmittel 8 bzw. die Kette 9 ist mechanisch an das Transportmodul 3 gekoppelt. Im Verlauf eines Wechsels des Transportmoduls 3 aus der Warteposition W1 in die bestimmte Betriebsposition BL und aus der bestimmten Betriebsposition BL in die Warteposition W1 behält das Transportmodul 3 seine mechanische Verbindung zum aus mehreren drehbeweglich miteinander in Verbindung stehenden einzelnen Gliedern gebildeten Übertragungsmittel 8 bzw. zur Kette 9 bei. Eine Zusammenschau der Figuren 4 und 6 verdeutlicht insbesondere, dass sich ein Umfangsverlauf des aus mehreren drehbeweglich miteinander in Verbindung stehenden einzelnen Gliedern 8 gebildeten Übertragungsmittels 8 bzw. der Kette 9 bei einem Überführen aus der bestimmten Betriebsposition BL in die Warteposition W1 und bei einem Einbringen aus der Warteposition W1 in die bestimmte Betriebsposition BL jeweils flexibel anpassen kann.

Die Führung 22 bzw. Umlenkung 24, wie sie in Fig. 4 beispielhaft dargestellt ist, kann auf Veranlassung der Steuerungseinheit S bei einem Einbringen des Transportmoduls 3 in die bestimmte Betriebsposition BL und bei einem Überführen des Transportmoduls 3 aus der bestimmten Betriebsposition BL in die Warteposition W1 unter Zuhilfenahme eines an die Steuerungseinheit S gekoppelten Aktors in seiner Position verstellt werden und hierbei auf den Umfangsverlauf des aus mehreren drehbeweglich miteinander in Verbindung stehenden einzelnen Gliedern gebildeten Übertragungsmittels 8 bzw. der Kette 9 einwirken. Beim Ausführungsbeispiel aus Fig. 4 ist der Führung 22 bzw. der Umlenkung 24 eine erste definierte Position zugeordnet, welche die Führung 22 bzw. Umlenkung 24 bei in die bestimmte Betriebsposition BL eingebrachtem Transportmodul 3 einnimmt sowie eine weitere definierte Position, welche die Führung 22 bzw. Umlenkung 24 bei in die Warteposition W1 überführtem Transportmodul 3 einnimmt. Die definierte Position und die weitere definierte Position sind in horizontaler Richtung zueinander versetzt. Somit kann die Führung 22 bzw. Umlenkung 24 auf Veranlassung der Steuerungseinheit S zum Einwirken auf den Umfangsverlauf des aus mehreren drehbeweglich miteinander in Verbindung stehenden einzelnen Gliedern gebildeten Übertragungsmittels 8 bzw. der Kette 9 in horizontaler Richtung bewegt bzw. in horizontaler Richtung verfahren werden.

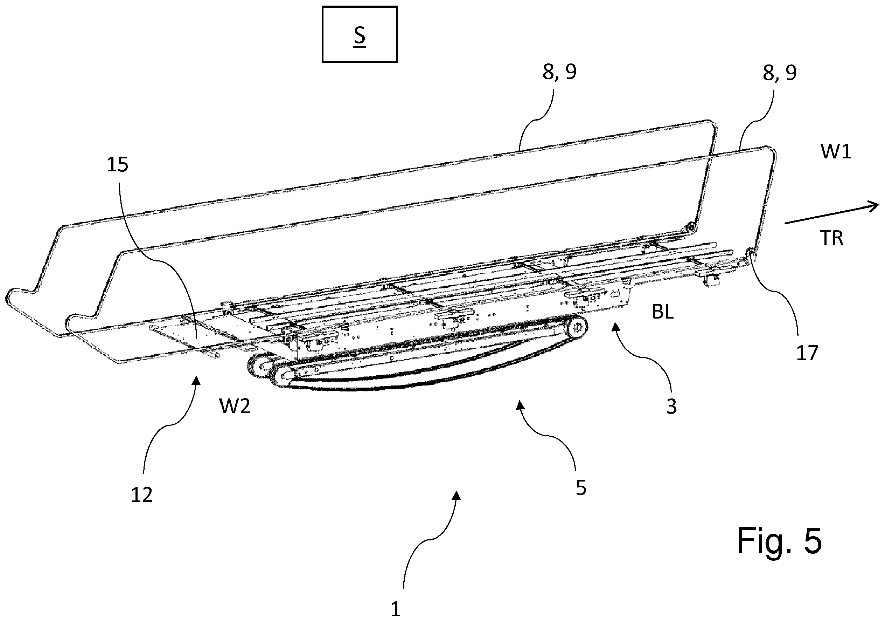

Die Fig. 5 zeigt eine weitere schematische Perspektivansicht der Ausführungsform einer Vorrichtung 1 aus den Figuren 1 bis 4, bei welcher sich das Transportmodul 3 in der bestimmten Betriebsposition BL befindet. Fig. 5 lässt zudem erkennen, dass das Arbeitsmodul 5 in eine für das Arbeitsmodul 5 vorgesehene Warteposition W2 überführt wurde. Die Überführung erfolgt selbständig über einen in den Figuren vorliegender Patentanmeldung nicht mit dargestellten Arbeitsmechanismus auf Veranlassung der Steuerungseinheit S. Um das Arbeitsmodul 5 in die Warteposition W2 zu überführen, wird das Arbeitsmodul 5 in vertikaler Richtung unterhalb eine durch die Vorrichtung 1 für die Zusammenstellungen an Artikeln ausgebildete Förderebene abgesenkt. Alternativ zum Überführen des Arbeitsmoduls 5 in die für das Arbeitsmodul 5 vorgesehene Warteposition W2 ist vorstellbar, dass das Arbeitsmodul 5 aus der Vorrichtung 1 entnommen wird und ggf. zum erneuten Einbringen in die bestimmte Betriebsposition BL bereitgehalten wird.

Die Fig. 6 zeigt eine weitere schematische Seitenansicht der Ausführungsform einer Vorrichtung 1 aus den Figuren 1 bis 5, wobei sich das Transportmodul 3 in der bestimmten Betriebsposition BL befindet. Eine Zusammenschau der Fig. 6 mit Fig. 3 verdeutlicht, dass die Einteilstäbe 13, welche an die Übertragungsmittel 8 bzw. Ketten 9 mechanisch gekoppelt sind, sowohl bei in die bestimmte Betriebsposition BL eingebrachtem Transportmodul 3 als auch bei in die bestimmte Betriebsposition BL eingebrachtem Arbeitsmodul 3 Zusammenstellungen an Getränkebehältnissen unter rückseitiger Anlage in Transportrichtung TR bewegen können. Sofern das Arbeitsmodul 5 in die bestimmte Betriebsposition BL eingebracht ist, bewegen die Einteilstäbe 13, welche an die Übertragungsmittel 8 bzw. Ketten 9 gekoppelt sind, Zusammenstellungen an Getränkebehältnissen unter rückseitiger Anlage über die Gleitplatte 15 und verlieren ihren Kontakt zur jeweiligen Zusammenstellung an Artikeln bei Übertritt der jeweiligen Zusammenstellung von der Gleitplatte 15 an das Arbeitsmodul 5. Sofern das Transportmodul 3 anstelle des Arbeitsmoduls 5 in die bestimmte Betriebsposition BL eingebracht ist, bewegen die Einteilstäbe 13, welche an die Übertragungsmittel 8 bzw. Ketten 9 gekoppelt sind, die Zusammenstellungen an Getränkebehältnissen unter rückseitiger Anlage über die Gleitplatte 15 und schieben die Zusammenstellungen an Getränkebehältnissen sodann über die Überschubplatte 20 des Transportmoduls 3, wobei die rückseitige Anlage des jeweiligen Einteilstabes 13 an der jeweiligen Zusammenstellung an Getränkebehältnissen hierbei durchgehend ausgebildet bleibt bzw. nicht aufgehoben wird.

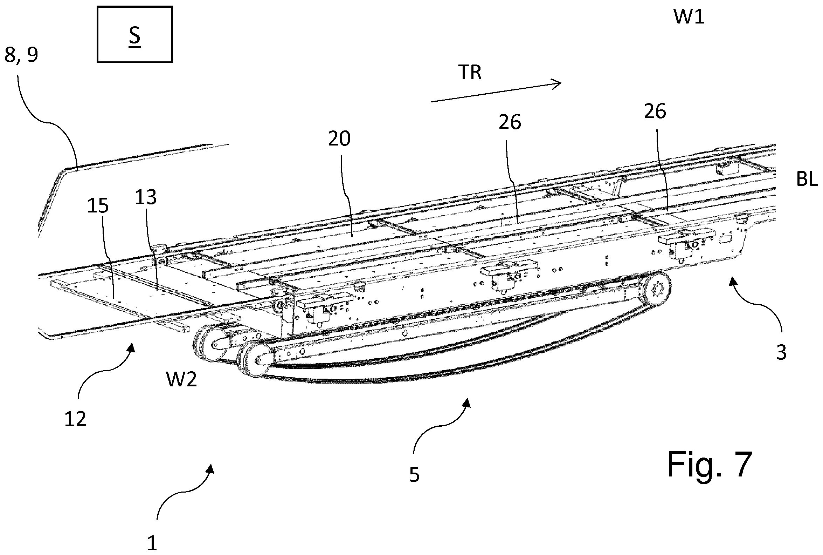

Die Fig. 7 zeigt eine weitere schematische Perspektivansicht der Vorrichtung 1 aus den Figuren 1 bis 6, wobei sich das Transportmodul 3 in der bestimmten Betriebsposition BL befindet. Bestandteil des Transportmoduls 3 sind zwei parallel zueinander orientierte Führungswände 26, deren jeweilige Längserstreckung in Transportrichtung TR orientiert ist. Zum Transport bzw. zur Bewegung der Zusammenstellungen an Getränkebehältnissen in mindestens einer Reihe kann der relative Abstand der Führungswände 26 zueinander definiert und unter Zuhilfenahme eines mit der Steuerungseinheit S in Verbindung stehenden Aktors angepasst werden.

Die Gleitplatte 15, über welche die Zusammenstellungen an Getränkebehältnissen via die Einteilstäbe 13 bewegt werden, schließt zumindest näherungsweise unmittelbar an die Überschubplatte 20 des in die bestimmte Betriebsposition BL eingebrachten Transportmoduls 3 an. Hierdurch können Zusammenstellungen an Getränkebehältnissen vom Zulauf 12 bzw. der Gleitplatte 15 auf das Arbeitsmodul 5 bzw. die Überschubplatte 20 übertreten, ohne hierbei ungewollt zu kippen. Mittels der Einteilstäbe 13, welche an die Übertragungsmittel 8 bzw. Ketten 9 gekoppelt sind, werden die Zusammenstellungen an Getränkebehältnissen von der Gleitplatte 15 auf die Überschubplatte 20 gesetzt und sodann in Transportrichtung TR zwischen den sich gegenüberliegenden Führungswänden 26 entlang des Transportmoduls 3 bewegt.

Sofern sich das Transportmodul 3 in der bestimmten Betriebsposition BL befindet bzw. sofern das Transportmodul 3 in die bestimmte Betriebsposition BL eingebracht wurde, werden keine als Verpackungsmaterial ausgebildeten Zuschnitte zwischen dem Zulauf 12 bzw. der Gleitplatte 15 und dem Transportmodul 3 bzw. der Überschubplatte 20 in einen Transportweg der Zusammenstellungen an Getränkebehältnissen eingebracht. Die Zusammenstellungen an Getränkebehältnissen werden mittels der Einteilstäbe 13 entlang des Transportmoduls 3 bzw. der Überschubplatte 20 bewegt, ohne hierbei mit einem Zuschnitt an Verpackungsmaterial in Verbindung zu stehen bzw. ohne hierbei auf einem Zuschnitt an Verpackungsmaterial aufzustehen. Sofern sich das Transportmodul 3 in der bestimmten Betriebsposition BL befindet bzw. sofern das Transportmodul 3 in die bestimmte Betriebsposition BL eingebracht ist, ist vorgesehen, dass die Zusammenstellungen an Getränkebehältnissen die Überschubplatte 20 verlassen bzw. ihren Kontakt zur Überschubplatte 20 verlieren und hierbei auf einen als Verpackungsmaterial ausgebildeten Zuschnitt auffahren. Bei dem als Verpackungsmaterial ausgebildeten Zuschnitt kann es sich um ein PAD handeln, welches eine Standfläche für eine jeweilige Zusammenstellung an Getränkebehältnissen bereitstellt und keine Laschen besitzt, welche zum Überführen in eine aufrechte Orientierung vorbereitet sind.

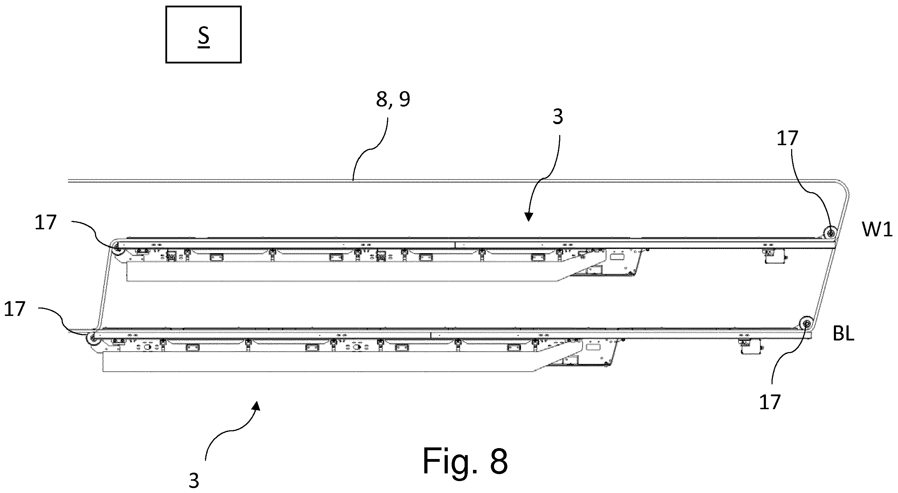

Die Fig. 8 zeigt das Transportmodul 3 der Vorrichtung 1 des Ausführungsbeispiels aus den Figuren 1 bis 7, wobei in Fig. 8 das Transportmodul 3 in der Warteposition W1 sowie in der bestimmten Betriebsposition BL zu erkennen ist. Fig. 8 zeigt hierbei, dass die bestimmte Betriebsposition BL gegenüber der Warteposition W1 sowohl in horizontaler Richtung als auch in vertikaler Richtung versetzt ist. Zum Einbringen des in der Warteposition W1 angeordneten Transportmoduls 3 in die bestimmte Betriebsposition BL wird das Transportmodul 3 daher in horizontaler Richtung und in vertikaler Richtung bewegt. Das Übertragungsmittel 8 bzw. die Kette 9 steht hierbei jeweils mit als Bestandteil des Transportmoduls 3 ausgebildeten Umlenkrollen 17 in Verbindung.

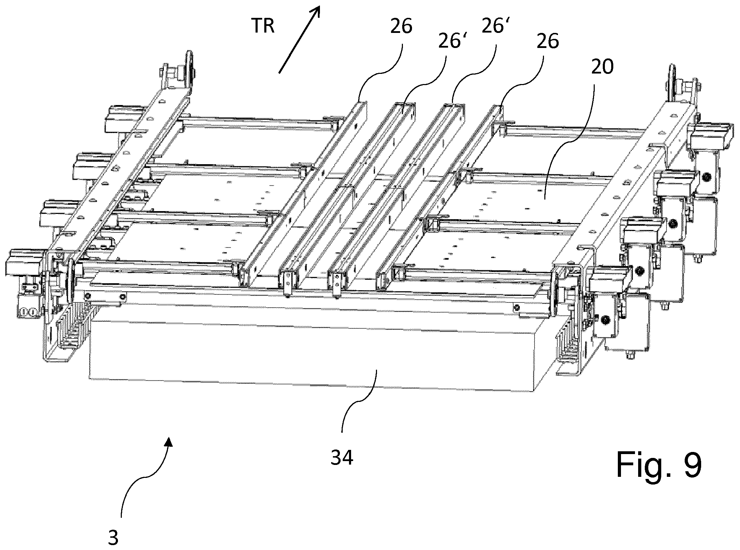

Die Fig. 9 zeigt eine schematische Perspektivansicht eines Transportmoduls 3, wie es für diverse Ausführungsformen der erfindungsgemäßen Vorrichtung 1 vorgesehen sein kann. Das Transportmodul 3 umfasst zwei mittige und in ihrer Relativposition zueinander feststehende Führungswände 26' sowie zwei äußere Führungswände 26, deren Relativposition zueinander aktorisch verstellbar ist. Die äußeren Führungswände 26 können hierbei lotrecht zur Transportrichtung TR verfahren bzw. lotrecht zur Transportrichtung TR bewegt werden.

Auch zeigt die Fig. 9 eine Zufuhr 34 für flächige Zuschnitte an Verpackungsmaterial. Die Zufuhr 34 ist als Bestandteil des Transportmoduls 3 ausgebildet. Die Zuschnitte an Verpackungsmaterial, welche mittels der Zufuhr 34 in einen Transportweg der Zusammenstellungen an Getränkebehältnissen eingebracht werden können, sind als PAD ausgebildet und verfügen über keine Laschen, welche zum Überführen in eine aufrechte Orientierung vorbereitet sind. Wie vorhergehend bereits erwähnt, werden die Zusammenstellungen an Getränkebehältnissen unter Oberflächenkontakt mit der Überschubplatte 20 in Transportrichtung TR entlang des Arbeitsmoduls 5 bewegt, verlieren sodann ihren Oberflächenkontakt zur Überschubplatte 20 und fahren auf einen jeweiligen Zuschnitt an Verpackungsmaterial bzw. auf ein jeweiliges PAD auf. Sofern sich das Transportmodul 3 in der bestimmten Betriebsposition BL befindet bzw. sofern das Transportmodul 3 in die bestimmte Betriebsposition BL eingebracht ist, ist somit ein erster Abschnitt vorgesehen, über welchen Zuschnitte an Verpackungsmaterial in den Transportweg der Zusammenstellungen an Getränkebehältnissen gelangen. Sofern sich das Arbeitsmodul 5 in der bestimmten Betriebsposition BL befindet bzw. sofern das Arbeitsmodul 5 in die bestimmte Betriebsposition BL eingebracht ist, ist ein zweiter Abschnitt vorgesehen, über welchen Zuschnitte an Verpackungsmaterial in den Transportweg der Zusammenstellungen an Getränkebehältnissen gelangen. Der erste Abschnitt und der zweite Abschnitt sind in Transportrichtung TR bzw. entlang des Transportweges der Zusammenstellungen an Artikeln zueinander versetzt.

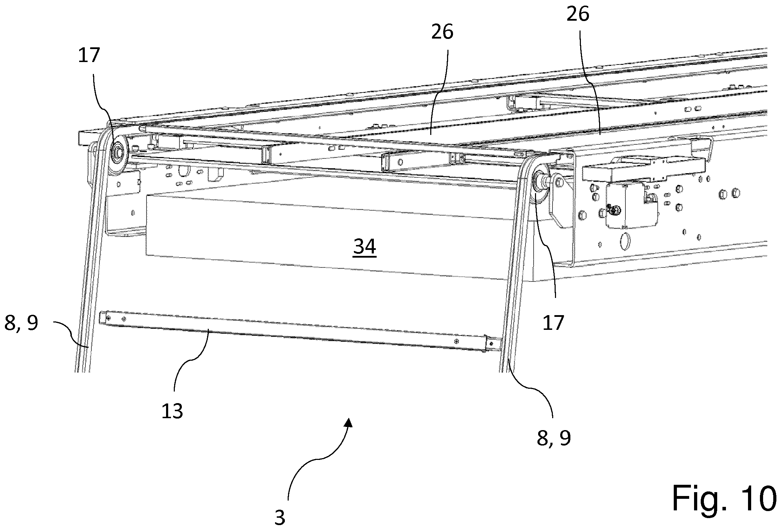

Die Fig. 10 zeigt eine weitere schematische Perspektivansicht des Transportmoduls 3 aus Fig. 9 unter Verdeutlichung weiterer Aspekte. So sind in Fig. 10 nochmals die aus mehreren drehbeweglich miteinander in Verbindung stehenden einzelnen Gliedern gebildeten Übertragungsmittel 8 bzw. die Ketten 9 zu erkennen, an welche die Einteilstäbe 13 mechanisch gekoppelt sind. Das Transportmodul 3 befindet sich in Fig. 10 in der Warteposition W1 (vgl. Fig. 8), so dass die als Bestandteil des Transportmoduls 3 ausgebildeten Umlenkrollen 17 das Übertragungsmittel 8 bzw. die Kette 9 in Richtung nach unten führen.

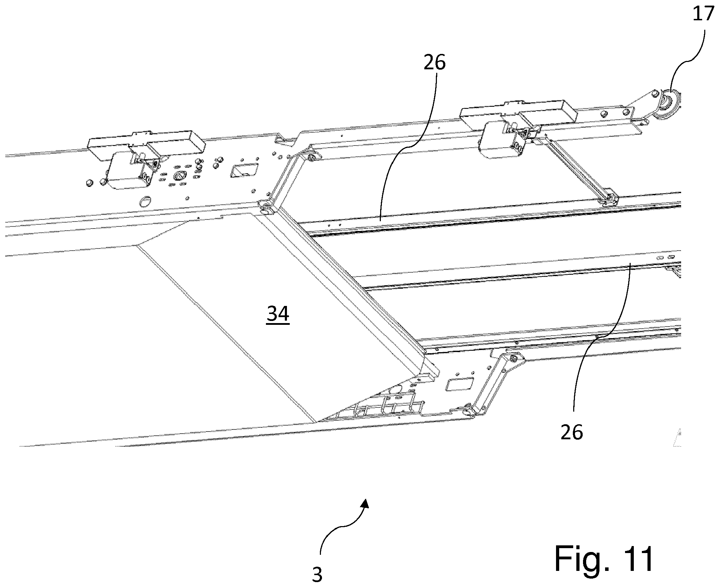

Die Fig. 11 zeigt eine schematische Perspektivansicht von unten auf das Transportmodul 3 aus Figuren 9 und 10. Gezeigt ist nochmals die Zufuhr 34, über welche flächige und durch ein jeweiliges PAD ausgebildete Verpackungszuschnitte in den Transportweg der Zusammenstellungen an Getränkebehältnissen eingebracht werden können. Zudem ist nochmals eine Umlenkrolle 17 mit dargestellt, die mit dem in Fig. 11 nicht mit dargestellten Übertragungsmittel 8 bzw. der Kette 9 in Eingriff steht. Weiter zeigt die Fig. 11 die sich gegenüberliegenden Führungswände 26, deren relativer Abstand zum Einstellen einer jeweiligen Gassenbreite für jeweilige Zusammenstellungen an Getränkebehältnissen zueinander angepasst werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 3: Transportmodul
- 5: Arbeitsmodul
- 7: Faltfinger
- 8: Übertragungsmittel
- 9: Kette
- 12: Zulauf
- 13: Einteilstab
- 15: Gleitplatte
- 17: Umlenkrolle
- 20: Überschubplatte
- 22: Führung
- 24: Umlenkung
- 26: Führungswand
- 34: Zufuhr

- BL: Betriebsposition
- TR: Transportrichtung
- S: Steuerungseinheit
- W1: Warteposition (Transportmodul 3)
- W2: weitere Warteposition (Arbeitsmodul 5)

## Patentansprüche

1. Vorrichtung (1) mit mindestens zwei selektiv in eine Betriebsposition (BL) überführbaren Modulen zum jeweiligen Umgang mit einzelnen Artikeln oder mit Zusammenstellungen an Artikeln, umfassend
- mindestens ein Transportmodul (3), welches zum Bewegen für eine erste Verpackungsart vorgesehener einzelner Artikel oder Zusammenstellungen an Artikeln vorbereitet und/oder ausgestattet ist,
- wenigstens ein Arbeitsmodul (5), welches zum Bewegung für eine zweite Verpackungsart, welche sich von der ersten Verpackungsart unterscheidet, vorgesehener einzelner Artikel oder Zusammenstellungen an Artikeln vorbereitet und/oder ausgestattet ist, und welches wenigstens eine Arbeitsmodul (5) Verpackungsmaterial, mit dem die einzelnen Artikel oder Zusammenstellungen an Artikeln während der Bewegung in Verbindung stehen, handhaben kann, wobei
- die Vorrichtung (1) eine bestimmte Betriebsposition (BL) und eine Warteposition (W1) ausbildet, in welche bestimmte Betriebsposition (BL) selektiv das mindestens eine Transportmodul (3) oder das wenigstens eine Arbeitsmodul (5) eingebracht werden kann, und in welche Warteposition (W1) das mindestens eine Transportmodul (3) mittels einer Entnahme aus der bestimmten Betriebsposition (BL) überführbar ist, und wobei
wenigstens ein aus mehreren drehbeweglich miteinander in Verbindung stehenden einzelnen Gliedern gebildetes Übertragungsmittel (8) vorgesehen ist, welches
a) mechanisch an das mindestens eine Transportmodul (3) gekoppelt ist und zur Bewegung der einzelnen Artikel oder Zusammenstellungen an Artikeln mit dem mindestens einen Transportmodul (3) in der bestimmten Betriebsposition (BL) zusammenwirkt und
b) mit einem jeweiligen Wechsel des mindestens einen Transportmoduls (3) aus der bestimmten Betriebsposition (BL) in die Warteposition (W1) und aus der Warteposition (W1) in die bestimmte Betriebsposition (BL) seine Ausrichtung entlang seines Umfangsverlaufs flexibel anpassen kann, **dadurch gekennzeichnet, dass**
- das aus mehreren drehbeweglich miteinander in Verbindung stehenden einzelnen Gliedern gebildete wenigstens eine Übertragungsmittel (8) eine Vielzahl an Transportelementen umlaufend antreibt, welche Vielzahl an Transportelementen die einzelnen Artikel oder Zusammenstellungen an Artikeln über eine als Bestandteil des mindestens einen in die bestimmte Betriebsposition (BL) eingebrachten mindestens einen Transportmoduls (3) ausgebildete horizontale Transportfläche gleitend und vorzugsweise unter jeweiliger rückseitiger Anlage bewegen kann und wobei vorgesehen ist, dass
- das mindestens eine Transportmodul (3) aus der bestimmten Betriebsposition (BL) entnehmbar und in die Warteposition (W1) überführbar ist, wobei die Vielzahl an Transportelementen zeitlich nach Überführung des mindestens einen Transportmoduls (3) in die Warteposition (W1) einzelne Artikel oder Zusammenstellungen an Artikeln unter vorzugsweise rückseitiger Anlage entlang einer horizontalen Förderebene bewegen und/oder unter vorzugsweise rückseitiger Anlage entlang einer horizontalen Förderebene begleiten kann.

2. Vorrichtung nach Anspruch 1, bei welcher dem in die bestimmte Betriebsposition (BL) eingebrachten wenigstens einen Arbeitsmodul (5) ein Zulauf (12) unmittelbar vorgeordnet ist, wobei die Vielzahl an Transportelementen die einzelnen Artikel oder Zusammenstellungen an Artikeln unter vorzugsweise rückseitiger Anlage entlang des Zulaufs (12) bewegen kann.

3. Vorrichtung nach Anspruch 1 oder Anspruch 2, umfassend einen Arbeitsmechanismus, über welchen Arbeitsmechanismus
a) das mindestens eine Transportmodul (3) selbständig aus der bestimmten Betriebsposition (BL) entnommen und in die Warteposition (W1) überführt werden kann sowie aus der Warteposition (W1) selbständig in die bestimmte Betriebsposition (BL) eingebracht werden kann und/oder über welchen Arbeitsmechanismus
b) das wenigstens eine Arbeitsmodul (5) selbständig aus der bestimmten Betriebsposition (BL) in eine für das wenigstens eine Arbeitsmodul (5) vorgesehene weitere Warteposition (W2) überführt werden kann sowie aus der für das wenigstens eine Arbeitsmodul (5) vorgesehenen weiteren Warteposition (W2) selbständig in die bestimmte Betriebsposition (BL) eingebracht werden kann.

4. Vorrichtung nach einem der Ansprüche 1 bis 3, bei welcher die Vorrichtung (1) für die einzelnen Artikel oder Zusammenstellungen an Artikeln eine horizontale Bewegungsebene ausbildet, wobei die Warteposition (W1), in welche das mindestens eine Transportmodul (3) aus der bestimmten Betriebsposition (BL) überführbar ist, oberhalb der horizontalen Bewegungsebene positioniert ist und/oder wobei eine für das wenigstens eine Arbeitsmodul (5) ausgebildete Warteposition (W2) unterhalb der horizontalen Bewegungsebene positioniert ist.

5. Vorrichtung nach einem der Ansprüche 1 bis 4, bei welcher
- das mindestens eine Transportmodul (3) eine horizontale und vorzugsweise durch wenigstens eine Überschubplatte (20) ausgebildete Transportfläche umfasst, und bei welcher
- an das wenigstens eine aus mehreren drehbeweglich miteinander in Verbindung stehenden einzelnen Gliedern gebildete Übertragungsmittel (8) eine Vielzahl an umlaufend geführten Transportelementen gekoppelt ist,
wobei die Vielzahl an umlaufend geführten Transportelementen zur gleitenden Bewegung der einzelnen Artikel oder Zusammenstellungen an Artikeln über die horizontale und vorzugsweise durch wenigstens eine Überschubplatte (20) ausgebildete Transportfläche des in die bestimmte Betriebsposition (BL) eingebrachten mindestens einen Transportmoduls (3) ausgebildet ist.

6. Vorrichtung nach Anspruch 5, bei welcher das mindestens eine Transportmodul (3) wenigstens zwei sich gegenüberliegende Führungswände (26) umfasst, wobei ein relativer Abstand der wenigstens zwei sich gegenüberliegenden Führungswände (26) zur Vorgabe wenigstens einer bestimmten sich entlang der horizontalen und vorzugsweise durch wenigstens eine Überschubplatte (20) ausgebildeten Transportfläche erstreckenden Transportspur für die einzelnen Artikel oder Zusammenstellungen an Artikeln angepasst werden kann.

7. Vorrichtung nach Anspruch 4 und 5 oder 4 bis 6, bei welcher die Warteposition (W1), in welche das mindestens eine Transportmodul (3) aus der bestimmten Betriebsposition (BL) überführbar ist, derart ausgebildet ist, dass sich die horizontale und vorzugsweise durch wenigstens eine Überschubplatte (20) ausgebildete Transportfläche des mindestens einen Transportmoduls (3) in der Warteposition (W1) oberhalb der zur Bewegung der Artikel oder Zusammenstellungen an Artikeln mittels der Vorrichtung (1) ausgebildeten horizontalen Förderebene befindet.

8. Vorrichtung nach einem der Ansprüche 1 bis 7, bei welcher das wenigstens eine in die bestimmte Betriebsposition (BL) eingebrachte Arbeitsmodul (5) mehrere umlaufend geführte Faltfinger (7) umfasst, über welche mehreren umlaufend geführten Faltfinger (7) Laschen von mit den einzelnen Artikeln oder den Zusammenstellungen an Artikeln in Verbindung stehenden Verpackungszuschnitten während der Bewegung der jeweiligen einzelnen Artikel oder Zusammenstellungen an Artikeln aufgerichtet werden können.

9. Vorrichtung nach einem der Ansprüche 1 bis 8, umfassend wenigstens eine vorzugsweise als Umlenkung (24) ausgebildete Führung (22) für das wenigstens eine aus mehreren drehbeweglich miteinander in Verbindung stehenden einzelnen Gliedern gebildete Übertragungsmittel (8), welche wenigstens eine vorzugsweise als Umlenkung (24) ausgebildete Führung (22) zum Einwirken auf die Ausrichtung entlang des Umfangsverlaufs des aus mehreren drehbeweglich miteinander in Verbindung stehenden einzelnen Gliedern gebildeten Übertragungsmittels (8) mindestens zwei unterschiedliche und auf einen Wechsel des mindestens einen Transportmoduls (3) aus der bestimmten Betriebsposition (BL) in die Warteposition (W1) und aus der Warteposition (W1) in die bestimmte Betriebsposition (BL) abgestimmte Lagen und/oder Positionen einnehmen kann.

10. Vorrichtung nach einem der Ansprüche 1 bis 9, bei welcher das wenigstens eine aus mehreren drehbeweglich miteinander in Verbindung stehenden einzelnen Gliedern gebildete Übertragungsmittel (8) durch wenigstens eine umlaufend geführte Kette (9) ausgebildet ist.

11. Verfahren zum Tauschen mindestens eines Transportmoduls (3) und wenigstens eines Arbeitsmoduls (5) für eine bestimmte Betriebsposition (BL), wobei entlang des mindestens einen Transportmoduls (3) in der bestimmten Betriebsposition (BL) einzelne Artikel oder Zusammenstellungen an Artikeln, welche für eine erste Verpackungsart vorgesehen sind, bewegt werden und wobei das wenigstens eine Arbeitsmodul (5) in der bestimmten Betriebsposition (BL) einzelne Artikel oder Zusammenstellungen an Artikeln, die für eine jeweilige zweite Verpackungsart vorgesehen ist, welche sich von der ersten Verpackungsart unterscheidet, bewegt werden und welches wenigstens eine Arbeitsmodul (5) in der bestimmten Betriebsposition (BL) Verpackungsmaterial, das mit den einzelnen Artikeln oder Zusammenstellungen an Artikeln in Verbindung steht, zeitlich während der Bewegung der einzelnen Artikel oder Zusammenstellungen an Artikeln handhabt, das Verfahren umfassend folgende Schritte:
- Entnahme des mindestens einen in die bestimmte Betriebsposition (BL) eingebrachten Transportmoduls (3) aus der bestimmten Betriebsposition (BL), Überführen des mindestens einen aus der bestimmten Betriebsposition (BL) entnommenen Transportmoduls (3) in eine Warteposition (W1) und Einbringen des wenigstens einen Arbeitsmoduls (5) in die bestimmte Betriebsposition (BL), und hierauf zeitlich folgend
- Entnahme des wenigstens einen in die bestimmte Betriebsposition (BL) eingebrachten Arbeitsmoduls (5) aus der bestimmten Betriebsposition (BL) und Einbringen des mindestens einen in der Warteposition (W1) befindlichen Transportmoduls (3) in die bestimmte Betriebsposition (BL), wobei
- das mindestens eine in die bestimmte Betriebsposition (BL) eingebrachte Transportmodul (3) zur Bewegung der einzelnen Artikel oder Zusammenstellungen an Artikeln mit wenigstens einem aus mehreren drehbeweglich miteinander in Verbindung stehenden einzelnen Gliedern gebildeten Übertragungsmittel (8) zusammenwirkt, wobei zeitlich bei Entnahme des mindestens einen Transportmoduls (3) aus der bestimmten Betriebsposition (BL) und zeitlich bei Einbringen des mindestens einen Transportmoduls (3) aus der Warteposition (W1) in die bestimmte Betriebsposition (BL)
a) eine zwischen dem wenigstens eine aus mehreren drehbeweglich miteinander in Verbindung stehenden einzelnen Gliedern gebildeten Übertragungsmittel (8) und dem mindestens einen Transportmodul (3) ausgebildete mechanische Verbindung aufrechterhalten wird und
b) das wenigstens eine aus mehreren drehbeweglich miteinander in Verbindung stehenden einzelnen Gliedern gebildete Übertragungsmittel (8) seine Ausrichtung entlang seines Umfangsverlaufs flexibel anpasst und wobei vorgesehen ist, dass
- das wenigstens eine aus mehreren drehbeweglich miteinander in Verbindung stehenden einzelnen Gliedern gebildete Übertragungsmittel (8) eine Vielzahl an Transportelementen umlaufend antreibt, welche Vielzahl an Transportelementen die einzelnen Artikel oder Zusammenstellungen an Artikeln über eine als Bestandteil des mindestens einen in die bestimmte Betriebsposition (BL) eingebrachten mindestens einen Transportmoduls (3) ausgebildete horizontale Transportfläche gleitend und vorzugsweise unter jeweiliger rückseitiger Anlage bewegt und wobei vorgesehen ist, dass
- das mindestens eine Transportmodul (3) aus der bestimmten Betriebsposition (BL) entnommen und in die Warteposition überführt wird, wobei die Vielzahl an Transportelementen zeitlich nach Überführung des mindestens einen Transportmoduls (3) in die Warteposition (W1) einzelne Artikel oder Zusammenstellungen an Artikeln unter vorzugsweise rückseitiger Anlage entlang einer horizontalen Förderebene bewegen und/oder unter vorzugsweise rückseitiger Anlage entlang einer horizontalen Förderebene begleitet.

12. Verfahren nach Anspruch 11, bei welchem
a) das mindestens eine in die bestimmte Betriebsposition (BL) eingebrachte Transportmodul (3) über einen Arbeitsmechanismus selbständig aus der bestimmten Betriebsposition (BL) entnommen und in die Warteposition (W1) überführt wird und über welchen Arbeitsmechanismus das wenigstens eine Arbeitsmodul (5) selbständig in die bestimmte Betriebsposition (BL) eingebracht wird und/oder bei welchem Verfahren zeitlich hierauf folgend
b) das wenigstens eine in die bestimmte Betriebsposition (BL) eingebrachte Arbeitsmodul (5) über einen Arbeitsmechanismus selbständig aus der bestimmten Betriebsposition (BL) entnommen wird und über welchen Arbeitsmechanismus das mindestens eine in der Warteposition (W1) befindliche Transportmodul (3) selbständig in die bestimmte Betriebsposition (BL) eingebracht wird.

13. Verfahren nach Anspruch 11 oder Anspruch 12, bei welchem das mindestens eine in die bestimmte Betriebsposition (BL) eingebrachte Transportmodul (3) bei der Entnahme aus der bestimmten Betriebsposition (BL) in Richtung nach oben angehoben wird und hierbei in die Warteposition (W1) gelangt, welche Warteposition (W1) oberhalb einer für die einzelnen Artikel oder Zusammenstellungen an Artikeln ausgebildeten horizontalen Bewegungsebene angeordnet ist und/oder bei welchem Verfahren das wenigstens eine in die bestimmte Betriebsposition (BL) eingebrachte wenigstens eine Arbeitsmodul (5) bei der Entnahme aus der bestimmten Betriebsposition (BL) in Richtung nach unten abgesenkt wird und hierbei in eine für das wenigstens eine Arbeitsmodul (5) vorgesehene Warteposition (W2) gelangt, welche für das wenigstens eine Arbeitsmodul (5) vorgesehene Warteposition (W2) unterhalb einer für die einzelnen Artikel oder Zusammenstellungen an Artikeln ausgebildeten horizontalen Bewegungsebene angeordnet ist.

14. Verfahren nach einem der Ansprüche 11 bis 13, bei welchem das wenigstens eine in die bestimmte Betriebsposition (BL) eingebrachte Arbeitsmodul (5) über mehrere umlaufend geführte Faltfinger (7) Laschen von mit den einzelnen Artikeln oder Zusammenstellungen an Artikeln in Verbindung stehenden Verpackungszuschnitten aufrichtet und mittels der mehreren umlaufend geführten Faltfinger (7) die einzelnen Artikel oder Zusammenstellungen an Artikeln während des Aufrichtens der Laschen bewegt, wobei die einzelnen Artikel oder Zusammenstellungen an Artikeln während der Bewegung über die mehreren umlaufend geführten Faltfinger (7) zumindest zeitweise durch ein jeweiliges Transportelement unter vorzugsweise rückseitiger Anlage begleitet werden.

15. Verfahren nach einem der Ansprüche 11 bis 14, mit einer vorzugsweise als Umlenkung (24) ausgebildeten Führung (22) für das wenigstens eine aus mehreren drehbeweglich miteinander in Verbindung stehenden einzelnen Gliedern gebildete Übertragungsmittel (8), wobei eine Lage und/oder Position der vorzugsweise als Umlenkung (24) ausgebildeten Führung (22) zum Einwirken auf die Ausrichtung entlang des Umfangsverlaufs des wenigstens einen aus mehreren drehbeweglich miteinander in Verbindung stehenden einzelnen Gliedern gebildeten Übertragungsmittels (8) im Rahmen eines Wechsels des mindestens einen Transportmoduls (3) aus der bestimmten Betriebsposition (BL) in die Warteposition (W1) und aus der Warteposition (W1) in die bestimmte Betriebsposition (BL) jeweils verstellt wird.

## Claims

1. An apparatus (1) with at least two modules, which are selectively transferable into an operating position (BL), to be used for the particular handling of individual articles or article sets, the apparatus (1) comprising
- at least one transport module (3), which is prepared and/or equipped for moving individual articles or article sets provided for a first packaging type;
- at least one work module (5), which is prepared and/or equipped for moving individual articles or article sets provided for a second packaging type that differs from the first packaging type, and which at least one work module (5) is able to handle packaging material with which the individual articles or article sets are in contact during the movement, wherein
- the apparatus (1) forms a specific operating position (BL) and a waiting position (W1), into which specific operating position (BL) the at least one transport module (3) or the at least one work module (5) is selectively insertable, and into which waiting position (W1) the at least one transport module (3) is transferable by means of being removed from the specific operating position (BL), and wherein
at least one transmission means (8) made from a plurality of individual links rotationally movably linked to each other is provided, which transmission means (8)
a) is mechanically coupled to the at least one transport module (3) and interacts with the at least one transport module (3) in the specific operating position (BL) for the purpose of moving the individual articles or article sets, and which transmission means (8)
b) is able to flexibly adapt its alignment along its circumferential course in each instance with a change of the at least one transport module (3) from the specific operating position (BL) into the waiting position (W1) and from the waiting position (W1) into the specific operating position (BL), **characterised in that**
- the at least one transmission means (8) made from a plurality of individual links rotationally movably linked to each other circumferentially drives a multitude of transport elements, which multitude of transport elements is able to move the individual articles or article sets, in a sliding manner and preferably in each instance in contiguous contact with the rear ends of said individual articles or article sets, across a horizontal transport surface formed as part of the at least one transport module (3) inserted into the specific operating position (BL), and wherein it is provided that
- the at least one transport module (3) is removable from the specific operating position (BL) and transferable into the waiting position (W1), wherein, temporally after transfer of the at least one transport module (3) into the waiting position (W1), the multitude of transport elements is able to move and/or to accompany individual articles or article sets along a horizontal conveying plane, with the transport elements in contiguous contact preferably with the rear ends of the individual articles or article sets.

2. The apparatus according to claim 1, in which an infeed (12) is disposed immediately upstream from the at least one work module (5) inserted into the specific operating position (BL), and wherein the multitude of transport elements is able to move the individual articles or article sets along the infeed (12), with the transport elements in contiguous contact preferably with the rear ends of the individual articles or article sets.

3. The apparatus according to claim 1 or claim 2, comprising a working mechanism, by way of which working mechanism
a) the at least one transport module (3) is independently removable from the specific operating position (BL) and transferable into the waiting position (W1), and it is also independently insertable from the waiting position (W1) into the specific operating position (BL); and/or by way of which working mechanism
b) the at least one work module (5) is independently transferable from the specific operating position (BL) into a further waiting position (W2) provided for the at least one work module (5), and it is also independently insertable from the further waiting position (W2) provided for the at least one work module (5) into the specific operating position (BL).

4. The apparatus according to one of the claims 1 to 3, in which the apparatus (1) forms a horizontal movement plane for the individual articles or article sets, wherein the waiting position (W1), into which the at least one transport module (3) is transferable from the specific operating position (BL), is positioned above the horizontal movement plane, and/or wherein a waiting position (W2), which is formed for the at least one work module (5), is positioned below the horizontal movement plane.

5. The apparatus according to one of the claims 1 to 4, in which
- the at least one transport module (3) comprises a horizontal transport surface preferably formed by at least one transfer plate (20), and in which
- a multitude of circumferentially guided transport elements is coupled to the at least one transmission means (8) made from a plurality of individual links rotationally movably linked to each other,
wherein the multitude of circumferentially guided transport elements is formed for the sliding movement of the individual articles or article sets across the horizontal transport surface, which is preferably formed by at least one transfer plate (20), of the at least one transport module (3) inserted into the specific operating position (BL).

6. The apparatus according to claim 5, in which the at least one transport module (3) comprises at least two guide walls (26) located opposite each other, wherein a relative distance of the at least two guide walls (26) located opposite each other is adaptable for the purpose of presetting at least one specific transport lane for the individual articles or article sets, with the transport lane extending along the horizontal transport surface, which is preferably formed by at least one transfer plate (20).

7. The apparatus according to claim 4 and 5 or 4 to 6, in which the waiting position (W1), into which the at least one transport module (3) is transferable from the specific operating position (BL), is formed such that the horizontal transport surface of the at least one transport module (3), which transport surface is preferably formed by at least one transfer plate (20), is, when in the waiting position (W1), located above a horizontal conveying plane formed for moving the articles or article sets by means of the apparatus (1).

8. The apparatus according to one of the claims 1 to 7, in which the at least one work module (5) inserted into the specific operating position (BL) comprises a plurality of circumferentially guided folding fingers (7), by way of which plurality of circumferentially guided folding fingers (7) flaps belonging to packaging blanks in contact with the individual articles or with the article sets are erectable during the movement of the particular individual articles or article sets.

9. The apparatus according to one of the claims 1 to 8, comprising at least one guide member (22), preferably formed as deflection member (24), for the at least one transmission means (8) made from a plurality of individual links rotationally movably linked to each other, which at least one guide member (22), which is preferably formed as deflection member (24), is able, for the purpose of acting upon the alignment along the circumferential course of the transmission means (8) made from a plurality of individual links rotationally movably linked to each other, to assume at least two different locations and/or positions that are coordinated to a change of the at least one transport module (3) from the specific operating position (BL) into the waiting position (W1) and from the waiting position (W1) into the specific operating position (BL).

10. The apparatus according to one of the claims 1 to 9, in which the at least one transmission means (8) made from a plurality of individual links rotationally movably linked to each other is formed by at least one circumferentially guided chain (9).

11. A method for exchanging at least one transport module (3) and at least one work module (5) for a specific operating position (BL), wherein individual articles or article sets provided for a first packaging type are moved along the at least one transport module (3) in the specific operating position (BL), and wherein the at least one work module (5) in the specific operating position (BL) moves individual articles or article sets provided for a particular second packaging type that differs from the first packaging type, and which at least one work module (5) in the specific operating position (BL) handles packaging material temporally during the movement of the individual articles or article sets, with the packaging material being in contact with the individual articles or article sets, the method comprising following steps:
- removing the at least one transport module (3) inserted into the specific operating position (BL) from the specific operating position (BL), transferring the at least one transport module (3) removed from the specific operating position (BL) into a waiting position (W1), and inserting the at least one work module (5) into the specific operating position (BL), and, temporally following hereupon,
- removing the at least one work module (5) inserted into the specific operating position (BL) from the specific operating position (BL) and inserting the at least one transport module (3) located in the waiting position (W1) into the specific operating position (BL), wherein,
- for the purpose of moving the individual articles or article sets, the at least one transport module (3) inserted into the specific operating position (BL) interacts with at least one transmission means (8) made from a plurality of individual links rotationally movably linked to each other, wherein, temporally while removing the at least one transport module (3) from the specific operating position (BL) and temporally while inserting the at least one transport module (3) from the waiting position (W1) into the specific operating position (BL),
a) a mechanical connection is maintained, said mechanical connection being formed between the at least one transmission means (8) made from a plurality of individual links rotationally movably linked to each other and the at least one transport module (3), and
b) the at least one transmission means (8) made from a plurality of individual links rotationally movably linked to each other flexibly adapts its alignment along its circumferential course, and wherein it is provided that
- the at least one transmission means (8) made from a plurality of individual links rotationally movably linked to each other circumferentially drives a multitude of transport elements, which multitude of transport elements is able to move the individual articles or article sets, in a sliding manner and preferably in each instance in contiguous contact with the rear ends of said individual articles or article sets, across a horizontal transport surface formed as part of the at least one transport module (3) inserted into the specific operating position (BL), and wherein it is provided that
- the at least one transport module (3) is removed from the specific operating position (BL) and transferred into the waiting position (W1), wherein, temporally after transfer of the at least one transport module (3) into the waiting position (W1), the multitude of transport elements moves and/or accompanies individual articles or article sets along a horizontal conveying level, with the transport elements in contiguous contact preferably with the rear ends of the individual articles or article sets.

12. The method according to claim 11, in which
a) the at least one transport module (3) inserted into the specific operating position (BL) is independently removed by way of a working mechanism from the specific operating position (BL) and is transferred into the waiting position (W1), and the at least one work module (5) is independently inserted by way of said working mechanism into the specific operating position (BL), and/or, temporally following hereupon,
b) the at least one work module (5) inserted into the specific operating position (BL) is independently removed by way of a working mechanism from the specific operating position (BL), and the at least one transport module (3) located in the waiting position (W1) is independently inserted by way of said working mechanism into the specific operating position (BL).

13. The method according to claim 11 or claim 12, in which the at least one transport module (3) inserted into the specific operating position (BL) is lifted upward while being removed from the specific operating position (BL) and in this connection passes on into the waiting position (W1), said waiting position (W1) being disposed above a horizontal movement plane formed for the individual articles or article sets; and/or in which method the at least one work module (5) inserted into the specific operating position (BL) is lowered downward while being removed from the specific operating position (BL) and in this connection passes on into a waiting position (W2) provided for the at least one work module (5), said waiting position (W2) provided for the at least one work module (5) being disposed below a horizontal movement plane formed for the individual articles or article sets.

14. The method according to one of the claims 11 to 13, in which the at least one work module (5) inserted into the specific operating position (BL) erects, by way of a plurality of circumferentially guided folding fingers (7), flaps belonging to packaging blanks in contact with the individual articles or with the article sets, and moves the individual articles or article sets by means of the plurality of circumferentially guided folding fingers (7) while the flaps are being erected, wherein, during the movement by way of the plurality of circumferentially guided folding fingers (7), the individual articles or article sets are at least temporarily accompanied by a particular transport element, which is in contiguous contact preferably with the rear ends of the individual articles or article sets.

15. The method according to one of the claims 11 to 14, with a guide member (22), preferably formed as deflection member (24), for the at least one transmission means (8) made from a plurality of individual links rotationally movably linked to each other, wherein, for the purpose of acting upon the alignment along the circumferential course of the at least one transmission means (8) made from a plurality of individual links rotationally movably linked to each other, a location and/or position of the guide member (22), which is preferably formed as deflection member (24), is in each instance readjusted in the context of a change of the at least one transport module (3) from the specific operating position (BL) into the waiting position (W1) and from the waiting position (W1) into the specific operating position (BL).

## Revendications

1. Dispositif (1) comprenant au moins deux modules aptes à être amenés sélectivement à une position de fonctionnement (BL) et destinés à la manipulation respective d'articles individuels ou d'ensembles d'articles, comprenant
- au moins un module de transport (3) qui est préparé et/ou équipé pour déplacer des articles individuels ou ensembles d'articles prévus pour un premier type d'emballage,
- au moins un module de travail (5) qui est préparé et/ou équipé pour déplacer des articles individuels ou ensembles d'articles prévus pour un deuxième type d'emballage qui est différent du premier type d'emballage, et lequel au moins un module de travail (5) peut manipuler du matériau d'emballage avec lequel les articles individuels ou les ensembles d'articles sont en liaison durant le déplacement, dans lequel
- le dispositif (1) forme une position de fonctionnement (BL) déterminée et une position d'attente (W1), dans laquelle position de fonctionnement (BL) déterminée peut être inséré de manière sélective ledit au moins un module de transport (3) ou ledit au moins un module de travail (5), et à laquelle position d'attente (W1) peut être amené ledit au moins un module de transport (3) en étant retiré de ladite position de fonctionnement (BL) déterminée, et dans lequel
au moins un moyen de transmission (8) est prévu qui est constitué par une pluralité d'éléments individuels qui sont en liaison entre eux en étant mobiles en rotation, et qui
a) est couplé mécaniquement audit au moins un module de transport (3) et agit de concert avec ledit au moins un module de transport (3) dans la position de fonctionnement (BL) déterminée pour déplacer les articles individuels ou les ensembles d'articles, et
b) qui, lorsqu'on fait changer respectivement ledit au moins un module de transport (3) de la position de fonctionnement (BL) déterminée à la position d'attente (W1) et de la position d'attente (W1) à la position de fonctionnement (BL) déterminée, peut adapter de manière flexible son orientation suivant son tracé circonférentiel, **caractérisé par le fait que**
- ledit au moins un moyen de transmission (8) constitué par une pluralité d'éléments individuels qui sont en liaison entre eux en étant mobiles en rotation entraîne en circulation une pluralité d'éléments de transport, laquelle pluralité d'éléments de transport peut déplacer à glissement, et de préférence tout en les appuyant respectivement de derrière, les articles individuels ou les ensembles d'articles sur une surface de transport horizontale qui est réalisée en tant que partie constituante dudit au moins un module de transport (3) inséré dans la position de fonctionnement (BL) déterminée, et dans lequel il est prévu que
- ledit au moins un module de transport (3) peut être retiré de la position de fonctionnement (BL) déterminée et être amené à la position d'attente (W1), dans lequel, après avoir amené ledit au moins un module de transport (3) à la position d'attente (W1), la pluralité d'éléments de transport peut déplacer des articles individuels ou des ensembles d'articles, tout en les appuyant de préférence de derrière, le long d'un plan de transport horizontal et/ou peut accompagner ceux-ci suivant un plan de transport horizontal tout en les appuyant de préférence de derrière.

2. Dispositif selon la revendication 1, dans lequel une amenée (12) est disposée directement en amont dudit au moins un module de travail (5) inséré dans la position de fonctionnement (BL) déterminée, dans lequel la pluralité d'éléments de transport peut déplacer les articles individuels ou les ensembles d'articles le long de l'amenée (12) tout en les appuyant de préférence de derrière.

3. Dispositif selon la revendication 1 ou la revendication 2, comprenant un mécanisme de travail, c'est par lequel mécanisme de travail que
a) ledit au moins un module de transport (3) peut être retiré indépendamment de la position de fonctionnement (BL) déterminée et peut être amené à la position d'attente (W1) et peut être amené indépendamment de la position d'attente (W1) à la position de fonctionnement (BL) déterminée, et/ou c'est par lequel mécanisme de travail que
b) ledit au moins un module de travail (5) peut être transféré indépendamment de la position de fonctionnement (BL) déterminée à une autre position d'attente (W2) prévue pour ledit au moins un module de travail (5) et peut être amené indépendamment de ladite autre position d'attente (W2) prévue pour ledit au moins un module de travail (5) à la position de fonctionnement (BL) déterminée.

4. Dispositif selon l'une quelconque des revendications 1 à 3, dans lequel le dispositif (1) forme un plan horizontal de déplacement pour les articles individuels ou les ensembles d'articles, dans lequel la position d'attente (W1) à laquelle ledit au moins un module de transport (3) peut être transféré depuis la position de fonctionnement (BL) déterminée est positionnée au-dessus du plan horizontal de déplacement, et/ou dans lequel une position d'attente (W2) conçue pour ledit au moins un module de travail (5) est positionnée au-dessous du plan horizontal de déplacement.

5. Dispositif selon l'une quelconque des revendications 1 à 4, dans lequel
- ledit au moins un module de transport (3) comprend une surface de transport horizontale et formée de préférence par au moins une plaque de transfert par poussée (20), et dans lequel
- une pluralité d'éléments de transport menés en circulation est couplée audit au moins un moyen de transmission (8) constitué par une pluralité d'éléments individuels qui sont en liaison entre eux en étant mobiles en rotation,
dans lequel ladite pluralité d'éléments de transport menés en circulation est conçue pour déplacer à glissement les articles individuels ou les ensembles d'articles sur la surface de transport dudit au moins un module de transport (3) inséré dans la position de fonctionnement (BL) déterminée, ladite surface de transport qui est horizontale et formée de préférence par au moins une plaque de transfert par poussée (20).

6. Dispositif selon la revendication 5, dans lequel ledit au moins un module de transport (3) comprend au moins deux parois de guidage (26) opposées, dans lequel une distance relative desdites au moins deux parois de guidage (26) opposées peut être adaptée pour définir au moins une voie de transport déterminée pour les articles individuels ou ensembles d'articles, qui s'étend le long de la surface de transport horizontale et formée de préférence par au moins une plaque de transfert par poussée (20).

7. Dispositif selon la revendication 4 et 5 ou 4 à 6, dans lequel la position d'attente (W1) à laquelle ledit au moins un module de transport (3) peut être transféré depuis la position de fonctionnement (BL) déterminée est conçue de manière à ce que la surface de transport dudit au moins un module de transport (3), qui est horizontale et formée de préférence par au moins une plaque de transfert par poussée (20), soit située, dans la position d'attente (W1), au-dessus du plan de transport horizontal conçu pour le déplacement des articles ou ensembles d'articles au moyen du dispositif (1).

8. Dispositif selon l'une quelconque des revendications 1 à 7, dans lequel ledit au mois un module de travail (5) inséré dans la position de fonctionnement (BL) déterminée comprend une pluralité de doigts de pliage (7) guidés en circulation, des languettes de découpes d'emballage qui sont en liaison avec les articles individuels ou les ensembles d'articles peuvent être redressées par lesquels plusieurs doigts de pliage (7) guidés en circulation, durant le déplacement des articles individuels ou ensembles d'articles respectifs.

9. Dispositif selon l'une quelconque des revendications 1 à 8, comprenant au moins un guide (22), réalisé de préférence en tant que dispositif de renvoi (24), pour ledit au moins un moyen de transmission (8) constitué par une pluralité d'éléments individuels qui sont en liaison entre eux en étant mobiles en rotation, dans lequel, pour agir sur l'orientation le long du tracé circonférentiel du moyen de transmission (8) constitué par une pluralité d'éléments individuels qui sont en liaison entre eux en étant mobiles en rotation, ledit au moins un guide (22) réalisé de préférence en tant que dispositif de renvoi (24) peut prendre au moins deux orientations et/ou positions différentes et accordées à un changement dudit au moins un module de transport (3) de la position de fonctionnement (BL) déterminée à la position d'attente (W1) et de la position d'attente (W1) à la position de fonctionnement (BL) déterminée.

10. Dispositif selon l'une quelconque des revendications 1 à 9, dans lequel ledit au moins un moyen de transmission (8) constitué par une pluralité d'éléments individuels qui sont en liaison entre eux en étant mobiles en rotation est réalisé par au moins une chaîne (9) guidée en circulation.

11. Procédé d'échange d'au moins un module de transport (3) et d'au moins un module de travail (5) pour une position de fonctionnement (BL) déterminée, dans lequel des articles individuels ou des ensembles d'articles qui sont prévus pour un premier type d'emballage sont déplacés le long dudit au moins un module de transport (3) dans la position de fonctionnement (BL) déterminée, et dans lequel ledit au moins un module de travail (5) déplace, dans la position de fonctionnement (BL) déterminée, des articles individuels ou des ensembles d'articles prévus pour un deuxième type d'emballage respectif qui est différent du premier type d'emballage, et lequel au moins un module de travail (5) manipule, dans la position de fonctionnement (BL) déterminée, durant le déplacement des articles individuels ou ensembles d'articles, du matériau d'emballage qui est en liaison avec les articles individuels ou ensembles d'articles, le procédé comprenant les étapes suivantes consistant à:
- retirer, de la position de fonctionnement (BL) déterminée, ledit au moins un module de transport (3) inséré dans la position de fonctionnement (BL) déterminée, transférer ledit au moins un module de transport (3) retiré de la position de fonctionnement (B) déterminée à une position d'attente (W1), et insérer ledit au moins un module de travail (5) dans la position de fonctionnement (BL) déterminée, et, après cela,
- retirer, de la position de fonctionnement (BL) déterminée, ledit au moins un module de travail (5) inséré dans la position de fonctionnement (BL) déterminée, et insérer, dans la position de fonctionnement (BL) déterminée, ledit au moins un module de transport (3) qui se trouve dans la position d'attente (W1), dans lequel
- ledit au moins un module de transport (3) inséré dans la position de fonctionnement (B) déterminée et destiné à déplacer les articles individuels ou les ensembles d'articles agit de concert avec au moins un moyen de transmission (8) constitué par une pluralité d'éléments individuels qui sont en liaison entre eux en étant mobiles en rotation, dans lequel, pendant que ledit au moins un module de transport (3) est retiré de la position de fonctionnement (B) déterminée et pendant que ledit au moins un module de transport (3) est amené de la position d'attente (W1) à la position de fonctionnement (B) déterminée,
a) une liaison mécanique réalisée entre ledit au moins un moyen de transmission (8) constitué par une pluralité d'éléments individuels qui sont en liaison entre eux en étant mobiles en rotation, et ledit au moins un module de transport (3) est maintenue, et
b) ledit au moins un moyen de transmission (8) constitué par une pluralité d'éléments individuels qui sont en liaison entre eux en étant mobiles en rotation adapte de manière flexible son orientation le long de son tracé circonférentiel, et dans lequel il est prévu que
- ledit au moins un moyen de transmission (8) constitué par une pluralité d'éléments individuels qui sont en liaison entre eux en étant mobiles en rotation entraîne en circulation une pluralité d'éléments de transport, laquelle pluralité d'éléments de transport déplace à glissement, et de préférence tout en les appuyant respectivement de derrière, les articles individuels ou les ensembles d'articles sur une surface de transport horizontale qui est réalisée en tant que partie constituante dudit au moins un module de transport (3) inséré dans la position de fonctionnement (BL) déterminée, et dans lequel il est prévu que
- ledit au moins un module de transport (3) est retiré de la position de fonctionnement (BL) déterminée et est amené à la position d'attente (W1), dans lequel, après avoir amené ledit au moins un module de transport (3) à la position d'attente (W1), la pluralité d'éléments de transport déplace des articles individuels ou des ensembles d'articles, tout en les appuyant de préférence de derrière, le long d'un plan de transport horizontal et/ou accompagne ceux-ci suivant un plan de transport horizontal tout en les appuyant de préférence de derrière.

12. Procédé selon la revendication 11, dans lequel
a) ledit au moins un module de transport (3) inséré dans la position de fonctionnement (BL) déterminée est retiré indépendamment, par un mécanisme de travail, de la position de fonctionnement (BL) déterminée et est amené à la position d'attente (W1), et c'est par lequel mécanisme de travail que ledit au moins un module de travail (5) est inséré indépendamment dans la position de fonctionnement (BL) déterminée, et/ou ensuite, dans lequel procédé
b) ledit au moins un module de travail (5) inséré dans la position de fonctionnement (BL) déterminée est retiré indépendamment, par un mécanisme de travail, de la position de fonctionnement (BL) déterminée, et c'est par lequel mécanisme de travail que ledit au moins un module de transport (3) se trouvant dans la position d'attente (W1) est inséré indépendamment dans la position de fonctionnement (BL) déterminée.

13. Procédé selon la revendication 11 ou la revendication 12, dans lequel ledit au moins un module de transport (3) inséré dans la position de fonctionnement (BL) déterminée est soulevé vers le haut lorsqu'il est retiré de la position de fonctionnement (BL) déterminée et atteint ainsi la position d'attente (W1), laquelle position d'attente (W1) est agencée au-dessus d'un plan horizontal de déplacement réalisé pour les articles individuels ou les ensembles d'articles, et/ou dans lequel procédé ledit au moins un module de travail (5) inséré dans la position de fonctionnement (BL) déterminée est abaissé vers le bas lorsqu'il est retiré de la position de fonctionnement (BL) déterminée et atteint ainsi une position d'attente (W2) prévue pour ledit au moins un module de travail (5), laquelle position d'attente (W2) prévue pour ledit au moins un module de travail (5) est agencée au-dessous d'un plan horizontal de déplacement réalisé pour les articles individuels ou les ensembles d'articles.

14. Procédé selon l'une quelconque des revendications 11 à 13, dans lequel ledit au mois un module de travail (5) inséré dans la position de fonctionnement (BL) déterminée fait redresser, par le biais d'une pluralité de doigts de pliage (7) guidés en circulation, des languettes de découpes d'emballage qui sont en liaison avec les articles individuels ou les ensembles d'articles et déplace, au moyen des plusieurs doigts de pliage (7) guidés en circulation, les articles individuels ou les ensembles d'articles pendant que les languettes sont redressées, dans lequel les articles individuels ou les ensembles d'articles étant accompagnés, durant le déplacement par l'intermédiaire de la pluralité de doigts de pliage (7) guidés en circulation, tout en étant appuyés de préférence de derrière, au moins temporairement par un élément de transport respectif.

15. Procédé selon l'une quelconque des revendications 11 à 14, comprenant un guide (22), réalisé de préférence en tant que dispositif de renvoi (24), pour ledit au moins un moyen de transmission (8) constitué par une pluralité d'éléments individuels qui sont en liaison entre eux en étant mobiles en rotation, dans lequel, pour agir sur l'orientation le long du tracé circonférentiel dudit au moins un moyen de transmission (8) constitué par une pluralité d'éléments individuels qui sont en liaison entre eux en étant mobiles en rotation, une orientation et/ou position du guide (22) réalisé de préférence en tant que dispositif de renvoi (24) est réglée respectivement dans le cadre d'un changement dudit au moins un module de transport (3) de la position de fonctionnement (BL) déterminée à la position d'attente (W1) et de la position d'attente (W1) à la position de fonctionnement (BL) déterminée.
